(19)

Europäisches
Patentamt
European
Patent Office
Office européen
des brevets

(11) **EP 4 693 581 A1**

(12) **EUROPEAN PATENT APPLICATION**
published in accordance with Art. 153(4) EPC

(43) Date of publication:
**11.02.2026 Bulletin 2026/07**

(21) Application number: **24781159.9**

(22) Date of filing: **25.03.2024**

(51) International Patent Classification (IPC):
*H01M 10/0585* (2010.01)    *H01M 50/46* (2021.01)
*H01M 50/414* (2021.01)    *H01M 10/0565* (2010.01)
*H01M 10/052* (2010.01)    *H01M 4/13* (2010.01)
*H01M 4/62* (2006.01)    *H01M 4/38* (2006.01)
*H01M 4/587* (2010.01)    *H01M 4/66* (2006.01)

(52) Cooperative Patent Classification (CPC):
**H01M 4/13; H01M 4/38; H01M 4/587; H01M 4/62;
H01M 4/66; H01M 10/052; H01M 10/0565;
H01M 10/0585; H01M 50/414; H01M 50/46;
Y02E 60/10**

(86) International application number:
**PCT/KR2024/003725**

(87) International publication number:
**WO 2024/205168 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.03.2023 KR 20230039343
28.04.2023 KR 20230056580**

(71) Applicant: **SAMSUNG SDI CO., LTD.
Yongin-si, Gyeonggi-do 17084 (KR)**

(72) Inventors:
• **BAE, Woo Jin**
**Yongin-Si Gyeonggi-do 17084 (KR)**
• **MOON, Jong Seok**
**Yongin-Si Gyeonggi-do 17084 (KR)**
• **LEE, Kang Hee**
**Yongin-Si Gyeonggi-do 17084 (KR)**
• **WOO, Hyun Sik**
**Yongin-Si Gyeonggi-do 17084 (KR)**
• **KIM, Hee Min**
**Yongin-Si Gyeonggi-do 17084 (KR)**
• **PARK, Jong Seok**
**Yongin-Si Gyeonggi-do 17084 (KR)**
• **PARK, Jin Hwan**
**Yongin-Si Gyeonggi-do 17084 (KR)**

(74) Representative: **Michalski Hüttermann & Partner
Patentanwälte mbB
Kaistraße 16A
40221 Düsseldorf (DE)**

(54) **LITHIUM BATTERY AND MANUFACTURING METHOD THEREFOR**

(57)    Disclosed are a lithium battery and a method of manufacturing the same, wherein an anode current collector, a separator, and a cathode are sequentially disposed in the lithium battery, wherein an anode active material layer or a protective layer is absent between the anode current collector and the separator, the anode current collector and the separator form an integrated structure, and the initial adhesion strength at an interface between the anode current collector and the separator of the integrated structure is 0.15 gf/cm to 1.0 gf/cm.

FIG. 1

**EP 4 693 581 A1**

## Description

### Technical Field

Disclosed are a lithium battery and a method of manufacturing the same.

### Background Art

Currently available lithium batteries primarily use carbon-based anode active materials such as graphite. Carbon-based anode active materials have no volume change during charge and discharge, resulting in high stability of lithium batteries, but have small capacity, and thus, anode active materials with higher capacity are required.

Lithium metal, which has a significantly higher theoretical electric capacity than carbon-based anode active materials, may be used as an anode active material.

Lithium metal forms dendrites on the lithium metal surface due to side reactions with the electrolyte during charge and discharge. The growth of these dendrites causes short circuits between the cathode and the anode, which may deteriorate the cycle life characteristics of lithium batteries containing lithium metal.

### Disclosure

### Technical Problem

One aspect provides a lithium metal battery having a novel structure.

Another aspect provides a method of preparing the lithium metal battery.

### Technical Solution

An embodiment of the present disclosure provides a lithium battery,

wherein an anode current collector, a separator, and a cathode are sequentially disposed,
an anode active material layer or a protective layer is absent between the anode current collector and the separator,
the anode current collector and the separator form an integrated structure, and
an initial adhesion strength at an interface between the anode current collector and the separator of the integrated structure is 0.15 gf/cm to 1.0 gf/cm.

A gel polymer electrolyte may be disposed at the interface between the anode current collector and the separator.

In an embodiment, a gel polymer electrolyte may be present in the pores of the separator.

The separator is polyethylene, polypropylene, polyethylene terephthalate, polybutylene terephthalate, polyester, polyacetal, polyamide, polycarbonate, polyimide, polyether ether ketone, polyether sulfone, polyphenylene oxide, polyphenylene sulfide, polyethylene naphthalate, polyvinylidene fluoride, polyethylene oxide, polyacrylonitrile, polyvinylidene fluoride-hexafluoropropylene copolymer, or a combination thereof.

The adhesion strength at the interface between the anode current collector and the separator of the integrated structure after charge and discharge of the lithium battery is 0.15 to 1.0 gf/cm. The gel polymer electrolyte present at the interface between the anode current collector and the separator includes a liquid electrolyte containing an organic solvent and a lithium salt, and a crosslinked polymer. The gel polymer electrolyte may also be present in the pores of the separator.

The thickness of the gel polymer electrolyte present at the interface between the anode current collector and the separator is not particularly limited, but is 1 $\mu$m or less, 0.001 to 1 $\mu$m, 0.01 to 1 $\mu$m, 0.1 to 1 $\mu$m, 0.1 to 0.9 $\mu$m, 0.1 to 0.8 $\mu$m, 0.1 to 0.7 $\mu$m, 0.1 to 0.5 $\mu$m, 0.1 to 0.3 $\mu$m, or 0.1 to 0.2 $\mu$m.

The crosslinked polymer is a polymerization product of a crosslinkable monomer. The crosslinkable monomer is diethylene glycol diacrylate (DEGDA), diethylene glycol dimethacrylate (DEGDMA), triethylene glycol diacrylate (TEGDA), triethylene glycol dimethacrylate (TEGDMA), tetraethylene glycol diacrylate (TTEGDA), glycidyl methacrylate, polyethylene glycol diacrylate (PEGDA), polyethylene glycol dimethacrylate (PEGDMA), polypropylene glycol diacrylate (PPGDA), dipropylene glycol diacrylate (DPGDA), tripropylene glycol diacrylate (TPGDA), dianol diacrylate (DDA), dianol dimethacrylate (DDMA), ethoxylated trimethylolpropane triacrylate (ETPTA), acrylate-functionalized ethylene oxide, butanediol dimethacrylate, ethoxylated neopentyl glycol diacrylate (NPEOGDA), propoxylated neopentyl glycol diacrylate (NPPOGDA), trimethylolpropane triacrylate (TMPTA), trimethylolpropane trimethacrylate (TMPTMA), pentaerythritol triacrylate (PETA), ethoxylated-propoxylated trimethylolpropane triacrylate (TMPEOTA/TMPPOTA), propoxylated glyceryl triacrylate, tris(2-hydroxyethyl)isocyanurate triacrylate (THEICTA), pentaerythritol tetraacrylate (PETTA), dipentaerythritol pentaacrylate (DPEPA), ditrimethylolpropane tetraacrylate (DTMPTTA); diglycidyl esters, diallyl suberate; acrylamide, divinylbenzene, or a combination thereof.

The lithium battery further includes a liquid electrolyte containing a lithium salt and an organic solvent, a solid electrolyte, or a combination thereof, and the liquid electrolyte may be a cathode electrolyte.

The lithium battery further includes an anode active material layer between the anode current collector and the separator, and the thickness of the anode active material layer is $0.1\ \mu m$ to $80\ \mu m$. The anode active material layer includes lithium metal foil, lithium metal powder, lithium alloy foil, lithium alloy powder, or a combination thereof. The lithium alloy contains lithium and a first metal.

The first metal is indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

The anode active material layer includes an anode active material, and the anode active material may include a carbon-based material; a mixture of a carbon-based material and one or more selected from metal and metalloid; a composite of a carbon-based material and one or more selected from metal and metalloid; or a combination thereof.

The carbon-based material includes amorphous carbon, and may include carbon black, carbon nanotubes, carbon nanofibers, fullerenes, activated carbon, carbon fibers, or a combination thereof.

In an embodiment, the lithium battery may have a structure in which the anode current collector/lithium metal layer/gel polymer electrolyte/separator are sequentially disposed after charge and discharge. The lithium metal layer is a deposited lithium layer.

In another embodiment, when the lithium battery further includes the anode active material layer, the structure after charge and discharge may be sequentially arranged as anode current collector/lithium metal layer/anode active material layer/gel polymer electrolyte/separator.

A protective layer may further be included between the anode current collector and the separator. This protective layer may be formed between the anode active material layer and the separator. When the lithium battery further includes the protective layer as described, the structure after charge and discharge may be sequentially arranged as anode current collector/lithium metal layer/protective layer/gel polymer electrolyte/separator.

The cathode includes a cathode current collector and a cathode active material layer, at least one of the cathode current collector and the anode current collector includes a base film and a metal layer disposed on one or both sides of the base film, the base film includes a polymer, and the polymer includes polyethylene terephthalate (PET), polyethylene (PE), polypropylene (PP), polybutylene terephthalate (PBT), polyimide (PI), or a combination thereof.

The metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Another aspect of the present disclosure provides a method of preparing a lithium battery, including: preparing an anode current collector;

disposing a separator on one surface of the anode current collector to form an anode current collector/separator structure;

injecting a gel polymer electrolyte-forming composition into the anode current collector/separator structure and performing heat treatment to prepare an integrated anode current collector/separator structure containing the gel polymer electrolyte;

preparing a cathode;

forming a cell structure by disposing the cathode on top of the integrated anode current collector/separator structure containing the gel polymer electrolyte; and

housing the cell structure in a battery case to thereby prepare the above-described lithium battery.

The heat treatment is carried out at a temperature of 40 to 120°C. The gel polymer electrolyte-forming composition includes a crosslinkable monomer, a lithium salt, an organic solvent, and a polymerization initiator.

In the preparation method, a liquid electrolyte containing a lithium salt and an organic solvent is injected during the housing of the cell structure in the battery case, and one or more selected from an anode active material layer and a protective layer are further included between the anode current collector and the separator.

**Advantageous Effects**

According to one aspect, the thermal shrinkage function of the separator is reduced, and by using such a separator, battery short circuits due to shrinkage at high temperatures can be prevented, thereby not only improving thermal stability and safety, but also providing a lithium battery with enhanced high-rate characteristics and improved cycle life characteristics.

**Description of Drawings**

FIG. 1 is a diagram illustrating a manufacturing process of an integrated anode current collector/separator structure containing a gel polymer electrolyte according to an embodiment.

FIG. 2 shows the results of a thermal shrinkage test after storing the lithium batteries of Example 1 and Comparative Example 1 in a chamber at 140 °C for 1 hour.

FIG. 3 shows the results of a thermal shrinkage test after storing the lithium batteries of Example 1 and Comparative Example 1 in a chamber at 150 °C for 1 hour.

FIG. 4 is a schematic view of a lithium battery according to an embodiment.

FIG. 5 is a schematic view of a lithium battery according to another embodiment.

FIG. 6 is a schematic view of a lithium battery according to yet another embodiment.

<EXPLANATION OF REFERENCE NUMERALS DESIGNATING THE MAJOR ELEMENTS OF THE DRAWINGS>

| | | | |
|---|---|---|---|
| 1 | LITHIUM BATTERY | 2, 20 | ANODE |
| 3, 10 | CATHODE | 4 | SEPARATOR |
| 5 | BATTERY CASE | 6 | CAP ASSEMBLY |
| 7 | CELL STRUCTURE | 8 | ELECTRODE TAB |

**Best Mode**

The present inventive concept described below may be subject to various modifications and may have various embodiments, and specific embodiments are illustrated in the drawings and described in detail. However, this is not intended to limit the present inventive concept to specific embodiments, and should be understood to include all modifications, equivalents, or substitutes included within the technical scope of the present inventive concept.

The terminology used herein is for the purpose of describing particular embodiments only and is not intended to be limiting of the present inventive concept. As used herein, the singular forms are intended to include the plural forms as well, unless the context clearly indicates otherwise. As used herein, the terms "comprises" and/or "comprising", or "includes" and/or "including", or "has", unless otherwise indicated, indicate that certain features, numbers, steps, operations, components, parts, constituents, materials, or any combination thereof described in the specification are present, but do not preclude the presence or addition of one or more other features, numbers, steps, operations, components, parts, constituents, materials, or a combination thereof. As used herein, "/" may be interpreted as "and", or as "or" depending on the context.

In the drawings, thicknesses may be magnified or exaggerated to clearly illustrate various layers and regions. Like reference numbers may refer to like elements throughout the drawings and the following description. Throughout the specification, when a component, such as a layer, a film, a region, or a plate, is described as being "above" or "on" another component, the component may be directly above the other component, or there may be yet another component therebetween. Although the terms "first", "second", and the like may be used herein to describe various elements, the elements are not to be construed as limited by such terms. These terms are used solely to distinguish one element from another. In the present specification and drawings, components having substantially the same functional configuration are denoted by the same reference numerals, and redundant description thereof is omitted.

In the present specification, the "particle diameter" of a particle refers to the average diameter if the particle is spherical, and to the average major axis length if the particle is non-spherical. The particle diameter may be measured using a particle size analyzer (PSA). The "particle diameter" refers to an average particle diameter. The average particle diameter may, for example, be the median particle diameter (D50). The median particle diameter (D50) is, for example, the particle size corresponding to 50 % cumulative volume, calculated from the side of smaller particle sizes in a size distribution measured by a laser-diffraction method. The average particle diameter and average major-axis length may be measured using a scanning electron microscope (SEM). When the particle size is measured using a scanning electron microscope, it is defined as the average value of 30 or more randomly selected particles having a size of 1 $\mu$m or greater, excluding fine powder.

In the present disclosure, the term "metal" includes both metallic elements in their elemental or ionic states, as well as metalloids such as silicon and germanium.

The term "alloy" refers to a mixture of two or more metals.

The term "cathode active material" refers to a material capable of undergoing lithiation and delithiation, and the term "anode active material" refers to a material capable of undergoing lithiation and delithiation.

The terms "lithiation" and "to lithiate" refer to the process of introducing lithium into a cathode active material or anode active material, while the terms "delithiation" and "to delithiate" refer to the process of removing lithium from a cathode active material or anode active material.

The terms "charging" and "to charge" refer to the process of supplying electrochemical energy to a battery, while the terms "discharging" and "to discharge" refer to the process of extracting electrochemical energy from a battery.

In the present disclosure, the terms "cathode" and "positive electrode" refer to the electrode at which electrochemical reduction and lithiation occur during discharge, and the terms "anode" and "negative electrode" refer to the electrode at which electrochemical oxidation and delithiation occur during discharge.

In the present disclosure, the term "thickness" refers to "average thickness".

Hereinafter, the lithium battery and the method of preparing the same according to embodiments will be described in greater detail.

A gel polymer electrolyte (GPE) refers to a gel semi-solid electrolyte in which a liquid is contained in a polymer solid electrolyte, and is manufactured broadly in the form of a free-standing film or by a method of injecting together with an electrolyte solution during electrolyte injection and then curing. Such GPE has the advantage of significantly improved stability, although there is capacity reduction due to increased resistance value compared to a pure lithium battery. However, when applied to a lithium metal battery, the gel polymer electrolyte may have reduced high-rate characteristics due to its resistance properties.

In an embodiment, the lithium battery addresses the above-described problems by applying the GPE to the separator to prevent thermal shrinkage of the separator at high temperatures, and by using a liquid electrolyte together therewith to improve high-rate characteristics.

In an embodiment, a lithium battery is provided that has an integrated substrate/separator structure with a gel polymer electrolyte, wherein the gel polymer electrolyte-forming composition is injected in a state where the anode current collector and the separator are attached and then cured, thereby improving thermal safety and reducing interfacial resistance, and a method for preparing the same is provided.

In an embodiment, the lithium battery includes an anode current collector, a separator, and a cathode sequentially disposed, wherein an anode active material layer or a protective layer is absent between the anode current collector and the separator, the anode current collector and the separator are an integrated structure, and the initial adhesion strength at the interface between the anode current collector and the separator of the integrated structure is 0.15 gf/cm to 1.0 gf/cm.

A gel polymer electrolyte is disposed between the anode current collector and the separator.

The lithium battery may be, for example, a lithium-ion battery or a lithium metal battery.

In the present specification, the "initial adhesion strength at the interface between the anode current collector and the separator of the integrated structure" refers to the adhesion strength between the anode current collector and the separator after assembly of the lithium battery but before performing charge and discharge.

Initial interfacial adhesion strength is evaluated by fixing a tape (26 mm × 76 mm) onto the upper surface of the separator that is integrated with the anode substrate, and measuring the peel strength in a T-peel configuration with an Instron 3342 tester at a pulling speed of 20 mm/min to 80 mm/min, 40 mm/min to 70 mm/min (for example, about 60 mm/min) and under a load of 0.1 kgf to 0.8 kgf, 0.2 kgf to 0.7 kgf (for example, 0.5 kgf).

The initial adhesion strength at the interface between the anode current collector and the separator of the integrated structure is, for example, 0.18 gf/cm to 1.0 gf/cm, 0.2 gf/cm to 1.0 gf/cm, 0.2 gf/cm to 0.9 gf/cm, 0.25 gf/cm to 0.9 gf/cm, 0.33 gf/cm to 0.9 gf/cm, 0.35 gf/cm to 0.9 gf/cm, 0.36 gf/cm to 0.9 gf/cm, 0.38 gf/cm to 0.9 gf/cm, 0.38 gf/cm to 0.87 gf/cm, or 0.38 gf/cm to 0.85 gf/cm.

In another embodiment, the initial adhesion strength at the interface between the anode current collector and the separator of the integrated structure is 0.33 gf/cm to 0.56 gf/cm.

The anode current collector and the separator may be laminated without a binder, and, during charging of the lithium battery, lithium may be uniformly deposited between the anode current collector and the separator, thereby suppressing dendrite formation.

The integrated structure is an integrated anode current collector/separator structure containing a gel polymer electrolyte and is obtained by: preparing an anode current collector; arranging a separator on one surface of the anode current collector to form an anode current collector/separator structure; and injecting a gel polymer electrolyte-forming composition into the anode current collector/separator structure followed by heat treatment.

In the lithium battery of the present disclosure, the gel polymer electrolyte-forming composition partially penetrates the separator and the anode current collector as the substrate and then gels, so that the substrate holds the separator to manufacture an integrated anode current collector/separator structure. When the anode current collector, serving as the substrate, holds the separator in this way, thermal safety is improved and shrinkage of the separator due to heat may be effectively prevented.

The substrate serves as a support on which the separator is disposed, and an example of the substrate is the anode current collector.

The separator includes a porous substrate, and the porous substrate may include polyethylene, polypropylene, polyethylene terephthalate, polybutylene terephthalate, polyester, polyacetal, polyamide, polycarbonate, polyimide, polyether ether ketone, polyether sulfone, polyphenylene oxide, polyphenylene sulfide, polyethylene naphthalate, polyvinylidene fluoride, polyethylene oxide, polyacrylonitrile, a polyvinylidene fluoride-hexafluoropropylene copolymer, or a combination thereof.

The pores of the separator, that is, the pores of the porous substrate, contain a gel polymer electrolyte, and a gel polymer electrolyte may also be disposed at the interface between the anode current collector and the separator.

The cathode may contain a liquid electrolyte, an ionic liquid, or a combination thereof.

In an embodiment, after charge and discharge of the lithium battery, the adhesion strength at the interface between the anode current collector and the separator of the integrated structure is 0.1 gf/cm to 0.3 gf/cm, 0.11 gf/cm to 0.29 gf/cm, 0.13 gf/cm to 0.29 gf/cm, 0.14 gf/cm to 0.29 gf/cm, 0.15 gf/cm to 0.29 gf/cm, or 0.17 gf/cm to 0.29 gf/cm.

In another embodiment, after charge and discharge of the lithium battery, the adhesion strength at the interface between the anode current collector and the separator of the integrated structure is 0.17 gf/cm to 0.29 gf/cm. The charge/discharge condition of the lithium battery is 0.1 C charge and 0.1 C discharge. Because the anode current collector and the separator retain excellent interfacial adhesion strength even after charge and discharge, a lithium battery with enhanced cycle life and high-rate performance can be produced.

The pores of the porous substrate forming the separator contain a gel polymer electrolyte that includes a liquid electrolyte and a crosslinked polymer. A gel polymer electrolyte may also be present at the interface between the anode current collector and the separator. In a separator having this structure, the liquid electrolyte is held within the crosslinked polymer network and is thus prevented from leaking to the outside.

The gel polymer electrolyte includes a crosslinked polymer and a liquid electrolyte, and the weight ratio of the liquid electrolyte to the crosslinked polymer is from 99 : 1 to 90 : 10.

Based on 100 parts by weight of the gel polymer electrolyte, the content of the crosslinked polymer is 1 to 10 parts by weight, 1 to 8 parts by weight, 1 to 5 parts by weight, 2 to 5 parts by weight, or 3 to 5 parts by weight. When the content of the liquid electrolyte and the crosslinked polymer falls within the above range, the thermal shrinkage characteristics of the separator can be effectively controlled.

An anode active material layer may additionally be included between the anode current collector and the separator. The anode active material layer may be, for example, a lithium-metal thin film.

In an embodiment, the lithium battery may further include a liquid electrolyte containing an organic solvent and a lithium salt, a solid electrolyte, or a combination thereof. The liquid electrolyte may be a cathode electrolyte.

A protective layer may further be introduced between the anode current collector and the separator. A protective layer may also be additionally introduced between the anode active-material layer and the separator.

The protective layer contains a polymer such as polyvinyl alcohol, polyimide, vinylidene fluoride-hexafluoropropylene copolymer, polyvinylidene fluoride, carboxymethyl cellulose, or styrene-butadiene rubber, or a combination of a polymer and an inorganic filler. The inorganic filler may include, for example, $SiO_2$, $Al_2O_3$, $Al(OH)_3$, $AlO(OH)$, $TiO_2$, $BaTiO_3$, $ZnO_2$, $Mg(OH)_2$, AlN (aluminum nitride), SiC (silicon carbide), BoN (boron nitride), or a combination thereof. By additionally introducing the protective layer, contact between lithium and the electrolyte may be minimized, reducing side reactions, and a uniform lithium-ion flow across the entire electrode can be established, thereby suppressing lithium-dendrite growth.

In an embodiment, the lithium battery may further include, in addition to the gel polymer electrolyte, a solid electrolyte, a semi-solid gel electrolyte, or a combination thereof.

The solid electrolyte may be, for example, an oxide-based solid electrolyte, a sulfide-based solid electrolyte, or a combination thereof.

The solid electrolyte may be, for example, an oxide-based solid electrolyte. The oxide-based solid electrolyte may include one or more selected from $Li_{1+x+y}Al_xTi_{2-x}Si_yP_{3-y}O_{12}$ ($0<x<2$, $0\leq y<3$), $BaTiO_3$, $Pb(Zr,Ti)O_3$ (PZT), $Pb_{1-x}La_xZr_{1-y}Ti_yO_3$ (PLZT) ($0\leq x<1$, $0\leq y<1$), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ ($0<x<2$, $0<y<3$), $Li_xAl_yTi_z(PO_4)_3$ ($0<x<2$, $0<y<1$, $0<z<3$), $Li_{1+x+y}(Al, Ga)_x(Ti, Ge)_{2-x}Si_yP_{3-y}O_{12}$ ($0\leq x\leq 1$, $0\leq y\leq 1$), $Li_xLa_yTiO_3$ ($0<x<2$, $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, $Li_{3+x}La_3M_2O_{12}$ (M = Te, Nb, or Zr, x is an integer from 1 to 10). The solid electrolyte may be prepared by a sintering method or the like. For example, the oxide-based solid electrolyte may be a garnet-type solid electrolyte selected from $Li_7La_3Zr_2O_{12}$ (LLZO) and $Li_{3+x}La_3Zr_{2-a}M_aO_{12}$ (M-doped LLZO, where M = Ga, W, Nb, Ta, or Al; x is an integer from 1 to 10, and $0 < a < 2$).

The sulfide-based solid electrolyte may include, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ or $P_2S_5$. The sulfide-based solid electrolyte particles are known to have higher lithium-ion conductivity compared to other inorganic compounds. For example, the sulfide-based solid electrolyte may include $Li_2S$ and $P_2S_5$. When the sulfide-based solid electrolyte material constituting the sulfide-based solid electrolyte includes $Li_2S$-$P_2S_5$, the molar mixing ratio of $Li_2S$ to $P_2S_5$ may be, for example, in the range of about 50:50 to about 90:10. Additionally, inorganic solid electrolytes prepared by adding $Li_3PO_4$, a halogen, a halogen compound, $Li_{2+2x}Zn_{1-x}GeO_4$ ("LISICON", $0 \leq x < 1$), $Li_{3+y}PO_{4-x}N_x$ ("LIPON", $0 < x < 4$, $0 < y < 3$), $Li_{3.25}Ge_{0.25}P_{0.75}S_4$ ("ThioLISICON"), $Li_2O$-$Al_2O_3$-$TiO_2$-$P_2O_5$ ("LATP") to $Li_2S$-$P_2S_5$, $SiS_2$, $GeS_2$, $B_2S_3$, or a combination thereof may be used as the sulfide-based solid electrolyte. Non-limiting examples of sulfide-based solid electrolyte materials include $Li_2S$-$P_2S_5$; $Li_2S$-$P_2S_5$-LiX (X = halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$ ($0 < m < 10$, $0 < n < 10$, Z = Ge, Zn, or Ga); $Li_2S$-$GeS_2$; $Li_2S$-$SiS_2$-$Li_3PO_4$; and $Li_2S$-$SiS_2$-$Li_pMO_q$ ($0 < p < 10$, $0 < q < 10$, M = P, Si, Ge, B, Al, Ga, or In). In this context, the sulfide-based solid electrolyte material may be prepared by processing a starting material of a sulfide-based solid electrolyte (e.g., $Li_2S$, $P_2S_5$, etc.) by a melt quenching method, mechanical milling, or the like. A calcination process may optionally be performed after the treatment. The sulfide-based solid electrolyte may be amorphous, crystalline, or a mixture of both.

The sulfide-based solid electrolyte may be, for example, at least one selected from $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are positive numbers, and Z is Ge, Zn, or Ga), $Li_2S$-$GeS_2$, $Li_2S$-$SiS_2$-$Li_3PO_4$, $Li_2S$-$SiS_2$-$Li_pMO_q$ (where p and q are positive numbers and M is P, Si, Ge, B, Al, Ga, or In), $Li_{7-x}PS_{6-x}Cl_x$ ($0 < x < 2$), $Li_{7-x}PS_{6-x}Br_x$ ($0 < x < 2$), and $Li_{7-x}PS_{6-x}I_x$ ($0 < x < 2$).

In another embodiment, a ceramic coating layer may be formed on both surfaces of the porous substrate constituting the separator.

By forming a ceramic coating layer, it is possible to improve cell performance in the lithium battery by suppressing lithium dendrite formation through the rigidity of the ceramic coating layer without significantly increasing the resistance of the cell. Furthermore, by adopting a separator having the above-described ceramic coating layer, heat resistance is secured, thermal shrinkage characteristics are improved, and material costs of the lithium battery can be reduced by minimizing the separator margin required for ensuring safety in cell design. In addition, the growth of dendrites from the anode can be physically suppressed, thereby improving the long-term lifespan at both room temperature and high temperature.

The ceramic coating layer includes inorganic particles and a binder.

The inorganic particles may be any materials usable for forming the coating layer of the separator and may include, for example, one inorganic oxide selected from $SiO_2$, $Al_2O_3$, $Al(OH)_3$, $AlO(OH)$, $TiO_2$, $BaTiO_3$, $ZnO_2$, $Mg(OH)_2$, as well as AIN (aluminum nitride), SiC (silicon carbide), BoN (boron nitride), or a combination thereof.

Inorganic particles having a dielectric constant of 5 or more may be used, such as $BaTiO_3$, $BaTiO_3$, $Pb(Zr,Ti)O_3$ (PZT), $Pb_{1-a}La_aZr_{1-b}Ti_bO_3$ (PLZT, where $0 < a < 1$, $0 < b < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, NiO, CaO, ZnO, $ZrO_2$, $Y_2O_3$, $Al_2O_3$, $TiO_2$, SiC, or a combination thereof.

The ceramic coating layer may further include inorganic particles having lithium ion conductivity, such as lithium phosphate ($Li_3PO_4$); lithium titanium phosphate ($Li_cTi_d(PO_4)_3$, $0 < c < 2$, $0 < d < 3$); lithium aluminum titanium phosphate ($Li_{a1}Al_{b1}Ti_{c1}(PO_4)_3$, $0 < a1 < 2$, $0 < b1 < 1$, $0 < c1 < 3$); $(LiAlTiP)_{a2}O_{b2}$-type glasses such as $14Li_2O$-$9Al_2O_3$-$38TiO_2$-$39P_2O_5$ ($0 < a2 < 4$, $0 < b2 < 13$); lithium lanthanum titanate ($Li_{a3}La_{b3}TiO_3$, $0 < a3 < 2$, $0 < b3 < 3$); lithium germanium thiophosphate such as $Li_{3.25}Ge_{0.25}P_{0.75}S_4$ ($Li_{a4}Ge_{b4}P_{c2}S_d$, $0 < a4 < 4$, $0 < b4 < 1$, $0 < c2 < 1$, $0 < d < 5$); lithium nitride such as $Li_3N$ ($Li_{a5}N_{b5}$, $0 < a5 < 4$, $0 < b5 < 2$); $SiS_2$-based glasses such as $Li_3PO_4$-$Li_2S$-$SiS_2$ ($Li_{a6}Si_{b6}S_{c3}$, $0 < a6 < 3$, $0 < b6 < 2$, $0 < c4 < 4$); and $P_2S_5$-based glasses such as LiI-$Li_2S$-$P_2S_5$ ($Li_{a7}P_{b7}S_{c5}$, $0 < a7 < 3$, $0 < b7 < 3$, $0 < c5 < 7$), or a mixture thereof.

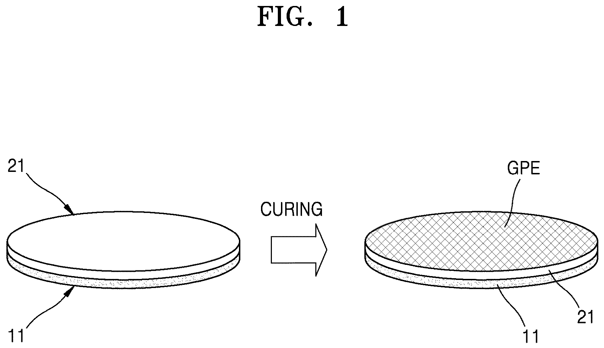

Referring to FIG. 1, a structure is obtained by laminating a separator 21 on an anode current collector 11, and a gel polymer electrolyte-forming composition is injected and cured by heat treatment so that the gel polymer electrolyte 31 is disposed at the interface between the anode current collector 11 and the separator 21, as well as in the pores of the separator. In this configuration, the anode active material layer is absent. The separator 21 is a porous substrate without a coating layer on its surface.

The anode active material layer is absent between the anode current collector 11 and the separator 21. Furthermore, the gel polymer electrolyte GPE is present at the interface between the anode current collector 11 and the separator 21 by curing or crosslinking the gel polymer electrolyte-forming composition, thereby exhibiting low interfacial resistance characteristics.

The pores of the porous substrate contain a gel polymer electrolyte including a liquid electrolyte and a crosslinked polymer, and the crosslinked polymer is a polymerization product of a crosslinkable monomer. When the gel polymer electrolyte is present in the pores of the porous substrate, the interfacial resistance between the cathode, anode, and separator is minimized, and the migration of lithium becomes facilitated.

The pore diameter of the separator 21 is generally 0.01 to 10 $\mu$m, and the thickness is generally 5 to 20 $\mu$m. Such separators may include, for example, olefin-based polymers such as polypropylene; or sheets or nonwoven fabrics made of glass fiber or polyethylene. When a solid polymer electrolyte is used as the electrolyte, the solid polymer electrolyte may also serve as the separator.

The crosslinkable monomer is, for example, a material that is electrochemically stable under the operating conditions of a cathode using a cathode active material containing 90 mol% or more of nickel, such as at a voltage of about 4.3 V or higher. Such a crosslinkable monomer may be, for example, a multifunctional (tri-substituted) methacrylate, such as trimethylolpropane triacrylate.

The crosslinked polymer is a polymerization product of the crosslinkable monomer. Here, the polymerization product of the crosslinkable monomer refers to a product obtained by polymerization and/or crosslinking reaction of the crosslinkable monomer. The crosslinkable monomer is a compound having at least three crosslinkable functional groups, and may include, for example, diethylene glycol diacrylate (DEGDA), diethylene glycol dimethacrylate (DEGDMA), triethylene glycol diacrylate (TEGDA), triethylene glycol dimethacrylate (TEGDMA), tetraethylene glycol diacrylate (TTEGDA), glycidyl methacrylate, polyethylene glycol diacrylate (PEGDA), polyethylene glycol dimethacrylate (PEGDMA), polypropylene glycol diacrylate (PPGDA), dipropylene glycol diacrylate (DPGDA), tripropylene glycol diacrylate (TPGDA), dianol diacrylate (DDA), dianol dimethacrylate (DDMA), ethoxylated trimethylolpropane triacrylate (ETPTA), acrylate-functionalized ethylene oxide, butanediol dimethacrylate, ethoxylated neopentyl glycol diacrylate (NPEOGDA), propoxylated neopentyl glycol diacrylate (NPPOGDA), trimethylolpropane triacrylate (TMPTA), trimethylolpropane trimethacrylate (TMPTMA), pentaerythritol triacrylate (PETA), ethoxylated and propoxylated trimethylolpropane triacrylate (TMPEOTA/TMPPOTA), propoxylated glyceryl triacrylate, tris(2-hydroxyethyl)isocyanurate triacrylate (THEICTA), pentaerythritol tetraacrylate (PETTA), dipentaerythritol pentaacrylate (DPEPA), ditrimethylolpropane tetraacrylate (DTMPTTA); diglycidyl esters, diallyl suberate; acrylamide, divinylbenzene, or a combination thereof.

The weight average molecular weight of the crosslinkable monomer may be in the range of 200 to 2,000, or in the range of 200 to 1,000, for example, 200 to 500. If the weight average molecular weight is less than 200, the crosslinking point density in the polymer structure after crosslinking may be too high, thereby restricting the movement of the lithium salt. If the weight average molecular weight exceeds 2,000, the crosslinking point density in the polymer structure after crosslinking may be too low, resulting in reduced electrolyte blocking capability.

Based on the total weight of the crosslinkable monomer and the liquid electrolyte, the content of the crosslinkable monomer is 1 to 10 parts by weight, and the content of the liquid electrolyte is 90 to 99 parts by weight. If the content of the crosslinkable monomer is less than 1 part by weight, the degree of crosslinking may be too low, preventing sufficient implement of crosslinking properties and leading to poor electrolyte retention and mechanical properties. If the content of the crosslinkable monomer exceeds 10 parts by weight, the internal resistance within the electrode plate increases, which may cause a reduction in capacity during high-rate charge/discharge.

The gel polymer electrolyte-forming composition may further include a crosslinking agent, a photoinitiator, or the like to assist the crosslinking of the crosslinkable monomer. The crosslinking agent and the initiator are not particularly limited as long as they are commonly used in the art.

The initiator may include, for example, benzoin ethyl ether and the like.

The usage content of the crosslinking agent and the initiator may fall within conventional ranges. The content of the initiator used may be, for example, 0.1 to 5 parts by weight, or 0.2 to 3 parts by weight, based on 100 parts by weight of the crosslinkable monomer. By using the gel polymer electrolyte formed in this manner, ionic conductivity close to that of a liquid electrolyte can be maintained, while the gel polymer electrolyte inside the cathode and anode can serve to prevent leakage of the liquid electrolyte. The liquid electrolyte may be trapped in the polymer matrix of the gel polymer electrolyte and remain within the polymer matrix, thereby facilitating the smooth movement of lithium ions. Furthermore, due to the excellent electrochemical characteristics of the polymer, decomposition reactions of the electrolyte can be suppressed within the range of -1 V to 5 V.

Specific examples of the olefin-based polymer used in the separator 21 include polyethylene, polypropylene, or multilayer films composed of two or more layers thereof. Mixed multilayer membranes such as a polyethylene/polypropylene two-layer separator, a polyethylene/polypropylene/polyethylene three-layer separator, or a polypropylene/polyethylene/polypropylene three-layer separator may be used.

A coating layer may be disposed on at least one surface of the porous substrate.

A cathode is disposed. The cathode 10 includes a cathode active material layer 12 and a cathode current collector 11.

The ceramic coating layer includes inorganic particles. By including such inorganic particles, a ceramic coating layer with excellent film strength is formed, which can effectively suppress the growth of lithium dendrites formed between the anode current collector and the separator.

The inorganic particles may include small-diameter inorganic particles, large-diameter inorganic particles, or a combination thereof. The average particle diameter of the small-diameter inorganic particles is 50 nm to 500 nm, 70 nm to 400 nm, 80 nm to 450 nm, or 100 nm to 300 nm. The average particle diameter of the large-diameter inorganic particles is 1 $\mu$m to 10 $\mu$m, 2 $\mu$m to 9 $\mu$m, 4 $\mu$m to 8 $\mu$m, or 5 $\mu$m to 7 $\mu$m. When the average particle diameters of the large-diameter and small-diameter inorganic particles fall within the above ranges, the growth of dendrites can be effectively suppressed.

The ceramic coating layer further includes a binder, which may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, acrylic polymers, fluororubber, or a combination thereof. The content of the binder is 5 to 20 parts by weight, based on 100 parts by weight of the total weight of the large-diameter and small-diameter inorganic particles. When the binder content is within this range, the adhesion strength of the ceramic coating layer to the porous substrate is excellent.

The liquid electrolyte includes a lithium salt and an organic solvent.

In the lithium battery according to an embodiment, the liquid electrolyte is retained within the polymer matrix where the gel polymer electrolyte is contained, thereby preventing leakage and suppressing electrochemical side reactions and electrolyte decomposition reactions occurring at the cathode and anode, ensuring stability and improving battery characteristics.

The non-aqueous solvent may include, for example, N-methyl-2-pyrrolidone, propylene carbonate, ethylene carbonate, butylene carbonate, dimethyl carbonate, diethyl carbonate, $\gamma$-butyrolactone, 1,2-dimethoxyethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphate triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl propionate, ethyl propionate, or other aprotic organic solvents. Among the aforementioned examples, carbonate-based solvents such as propylene carbonate, ethylene carbonate, butylene carbonate, dimethyl carbonate, and diethyl carbonate may be used.

The lithium salt may be any conventionally used in lithium secondary batteries and should be readily soluble in the non-aqueous solvent. Examples include one or more of $LiSCN$, $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$ and $LiB(C_2O_4)_2$.

The concentration of the lithium salt may be, for example, 1 to 5 M in the organic electrolyte, or more specifically, 1 to 2.5 M. This range can provide a sufficient amount of lithium ions required for charge and discharge in the lithium secondary battery.

An anode active material layer may be disposed between the anode current collector and the separator.

According to an embodiment, the anode active material layer may be disposed at the time of assembling the lithium battery. According to another embodiment, the anode active material layer may be included by plating of lithium metal after charging. The anode active material layer may be a plated lithium layer.

The anode active material layer 22 includes lithium metal or a lithium alloy.

The thickness of the anode active material layer may be 1 to 500 $\mu$m, 5 to 500 $\mu$m, 10 $\mu$m to 30 $\mu$m, or 10 $\mu$m to 25 $\mu$m. When the thickness of the anode active material layer falls within the above range, cycle characteristics are improved without a decrease in energy density of the lithium battery.

When the anode active material layer is disposed at the time of assembly, it may include carbon-based material alone, or one or more selected from carbon-based material, metal, and metalloid.

The carbon-based material includes amorphous carbon, with an average particle diameter of the amorphous carbon being 10 nm to 100 nm. The carbon-based material may include carbon black (CB), acetylene black (AB), furnace black (FB), ketjen black (KB), graphene, or a combination thereof.

The anode active material layer includes lithium metal foil, lithium metal powder, lithium alloy foil, lithium alloy powder, or a combination thereof, and the lithium alloy contains lithium and a first metal.

The first metal is selected from the group consisting of indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, bismuth, tantalum, hafnium, barium, vanadium, strontium, lanthanum, or a combination thereof.

The anode active material layer 22 may include, for example, lithium foil, lithium powder, or a combination thereof. The lithium foil may include lithium metal foil, lithium alloy foil, or a combination thereof. The lithium powder may include lithium metal powder, lithium alloy powder, or a combination thereof. The lithium alloy is an alloy of lithium and another metal capable of forming an alloy with lithium, such as a lithium-silver alloy, lithium-zinc alloy, lithium-magnesium alloy, or lithium-tin alloy. An anode active material layer including lithium metal foil may be referred to as a lithium metal layer. An anode active material layer including lithium alloy foil may be referred to as a lithium alloy layer. An anode active material layer including lithium metal powder and/or lithium alloy powder may be formed by coating a slurry containing lithium powder and a binder on the anode current collector. The binder may be a fluorine-based binder, such as polyvinylidene fluoride (PVDF). The anode active material layer may not include a carbon-based anode active material. Therefore, the anode active material layer may be composed of a metal-based anode active material.

The anode current collector is composed of a material that does not react with lithium, that is, a material that does not form an alloy or compound with lithium. Examples of the material constituting the anode current collector include copper (Cu), stainless steel, titanium (Ti), iron (Fe), cobalt (Co), and nickel (Ni), but are not limited thereto; any material commonly used as an electrode current collector in the art may be used. The anode current collector may be composed of one of the above-mentioned metals, or may be composed of an alloy of two or more metals or a coating material. The anode current collector may be, for example, in the form of a plate or a foil.

In an embodiment of the present disclosure, the anode current collector may include a base film and a metal layer disposed on one or both sides of the base film. The base film may include, for example, a polymer. The polymer may be, for example, a thermoplastic polymer. Examples of the polymer include polyethylene terephthalate (PET), polyethylene (PE), polypropylene (PP), polybutylene terephthalate (PBT), polyimide (PI), or a combination thereof. By including a thermoplastic polymer, the base film may liquefy upon occurrence of a short circuit, thereby suppressing a sudden increase in current. The base film may be, for example, an insulator. The metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof.

The metal layer may function as an electrochemical fuse, being severed under overcurrent conditions to provide a short-circuit prevention function. By adjusting the thickness of the metal layer, the threshold current and maximum current can be controlled. The metal layer may be plated or deposited on the base film. As the thickness of the metal layer decreases, the threshold current and/or maximum current of the anode current collector also decreases, which can enhance the safety of the lithium battery during a short circuit. A lead tab may be additionally provided on the metal layer for external connection. The lead tab may be welded to the metal layer or to a laminate of the metal layer and base film by ultrasonic welding, laser welding, or spot welding. During welding, the base film and/or the metal layer may melt, electrically connecting the metal layer to the lead tab. To strengthen the weld between the metal layer and the lead tab, a metal chip may be added between the metal layer and the lead tab. The metal chip may be a thin chip made of the same material as the metal of the metal layer. The metal chip may be, for example, a metal foil or a metal mesh. Examples of the metal chip include aluminum foil, copper foil, and SUS foil. The lead tab may be welded to a laminate of the metal chip and the metal layer, or a laminate of the metal chip, the metal layer, and the base film, by placing the metal chip on the metal layer and performing welding. During welding, the base film, metal layer, and/or metal chip may melt, allowing the metal layer or the metal chip/metal layer laminate to be electrically connected to the lead tab. A metal chip (metal chip) and/or a lead tab may be additionally provided on a portion of the metal layer. The thickness of the base film may be, for example, 1 to 50 $\mu$m, 1.5 to 50 $\mu$m, 1.5 to 40 $\mu$m, or 1 to 30 $\mu$m. When the base film has a thickness within this range, the weight of the electrode assembly can be more effectively reduced. The melting point of the base film may be, for example, 100 to 300 °C, 100 to 250 °C or lower, or 100 to 200 °C. When the base film has a melting point within the aforementioned range, the base film may melt during the welding process of the lead tab, facilitating the bonding of the lead tab. To improve the adhesion between the base film and the metal layer, surface treatment such as corona treatment may be performed on the base film. The thickness of the metal layer may be, for example, 0.01 to 3 $\mu$m, 0.1 to 3 $\mu$m, 0.1 to 2 $\mu$m, or 0.1 to 1 $\mu$m. When the metal layer has a thickness within this range, conductivity can be maintained while securing the stability of the electrode assembly. The thickness of the metal chip may be, for example, 2 to 10 $\mu$m, 2 to 7 $\mu$m, or 4 to 6 $\mu$m. When the metal chip has a thickness within this range, connection between the metal layer and the lead tab can be more readily achieved. By adopting such a structure for the anode current collector, the weight of the electrode can be reduced, thereby improving the energy density.

In an embodiment of the present disclosure, the cathode current collector may include a base film and a metal layer disposed on one or both sides of the base film. The base film may include, for example, a polymer. The polymer may be, for example, a thermoplastic polymer. Examples of the polymer include polyethylene terephthalate (PET), polyethylene (PE), polypropylene (PP), polybutylene terephthalate (PBT), polyimide (PI), or a combination thereof. Since the base film includes a thermoplastic polymer, it can liquefy in the event of a short circuit, thereby suppressing a sudden increase in current. The base film may be, for example, an insulator. The metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or alloys thereof. The cathode current collector may further include a metal chip and/or a lead tab. Details regarding the base film, metal layer, metal chip, and lead tab of the cathode current collector are as described above with reference to the anode current collector. By adopting such a structure, the cathode current collector can reduce the weight of the electrode and thereby improve the energy density.

The cathode current collector 11 may additionally include a metal chip and/or a lead tab. More detailed descriptions of the base film, metal layer, metal chip, and lead tab of the cathode current collector 11 may be found in the above descriptions related to the anode current collector 21. By having such a structure, the cathode current collector 11 can reduce electrode weight and consequently enhance energy density.

The anode active material layer may include an anode active material and a binder.

The anode active material may be in the form of particles. The average particle diameter of the anode active material in particle form may be, for example, 10 nm to 4 $\mu$m, 10 nm to 1 $\mu$m, 10 nm to 500 nm, 10 nm to 100 nm, or 20 nm to 80 nm. When the anode active material has an average particle diameter within such a range, reversible lithium plating and/or dissolution during charge and discharge may be facilitated. The average particle diameter of the anode active material is, for example, the median diameter (D50) measured using a laser particle size analyzer.

The anode active material may include one or more selected from carbon-based anode active materials and metal or metalloid anode active materials. The carbon-based anode active material may be, for example, amorphous carbon. Examples of the carbon-based anode active material include carbon black (CB), acetylene black (AB), furnace black (FB), ketjen black (KB), and graphene, but are not limited thereto, and any material classified as amorphous carbon in the technical field may be used. Amorphous carbon refers to carbon that has no crystallinity or very low crystallinity, and is distinct from crystalline carbon or graphite-based carbon. The metal or metalloid anode active material may include one or more selected from the group consisting of gold (Au), platinum (Pt), palladium (Pd), silicon (Si), silver (Ag), aluminum (Al), bismuth (Bi), tin (Sn), and zinc (Zn), but is not limited thereto. Any material that forms an alloy or compound with lithium and is used as a metal or metalloid anode active material in the art may be used. For example, nickel (Ni) does not form an alloy with lithium and is therefore not considered a metal anode active material in the present specification. The anode active material layer may include a single type of the above anode active materials or a mixture of two or more different anode active materials. The anode active material layer may include a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture may be, for example, a weight ratio of 10:1 to 1:2, 10:1 to 1:1, 7:1 to 1:1, 5:1 to 1:1, or 4:1 to 2:1. The anode active material contained in the anode active material layer may include, for example, a mixture of first particles made of amorphous carbon and second particles made of a metal or metalloid. The metal may include, for example, gold (Au), platinum (Pt), palladium (Pd), silicon (Si), silver (Ag), aluminum (Al), bismuth (Bi), tin (Sn), and zinc (Zn). The content of the second particles, based on the total weight of the mixture, is 8 to 60 wt%, 10 to 50 wt%, 15 to 40 wt%, or 20 to 30 wt%. When the second particles are present within the aforementioned ranges, the cycle characteristics of the lithium battery may be further improved.

The binder included in the anode active material layer may include, for example, styrene-butadiene rubber (SBR), polytetrafluoroethylene (PTFE), polyvinylidene fluoride (PVDF), polyethylene, vinylidene fluoride/hexafluoropropylene copolymer, polyacrylonitrile, polymethyl methacrylate, or any other binder commonly used in the art. The binder may be composed of a single binder or a combination of two or more different binders. If the anode active material layer does not include a binder, the anode active material layer may be easily separated from the ceramic coating layer 21 or the anode current collector 21. The content of the binder in the anode active material layer may be, for example, 1 to 20 wt% based on the total weight of the anode active material layer.

The thickness of the anode active material layer may be, for example, 1 $\mu$m to 20 $\mu$m, 1 $\mu$m to 15 $\mu$m, 2 $\mu$m to 10 $\mu$m, or 3 $\mu$m to 7 $\mu$m. The thickness of the anode active material layer may also be, for example, 1 % to 50 %, 1 % to 30 %, 1 % to 10 %, or 1 % to 5 % of the thickness of the cathode active material layer. If the thickness of the anode active material layer is excessively thin, lithium dendrites formed between the anode active material layer and the anode current collector may collapse the anode active material layer, making it difficult to improve the cycle characteristics of the lithium battery. If the thickness of the anode active material layer is excessively increased, the energy density of the lithium battery employing the anode 20 may decrease, and improvement in cycle characteristics may also be difficult.

As the thickness of the anode active material layer decreases, for example, the charge capacity of the anode active material layer also decreases. The charge capacity of the anode active material layer may be, for example, 0.1 % to 50 %, 1 % to 30 %, 1 % to 10 %, 1 % to 5 %, or 1 % to 2 % of the charge capacity. If the charge capacity of the anode active material layer is excessively small, lithium dendrites formed between the anode active material layer and the anode current collector may collapse the anode active material layer, making it difficult to improve the cycle characteristics of the lithium battery. If the charge capacity of the anode active material layer is excessively large, the energy density of the lithium battery employing the anode (20) may decrease, and improvement in cycle characteristics may also be difficult. The charge capacity of the cathode active material layer is obtained by multiplying the charge capacity density (mAh/g) of the cathode active material by the mass of the cathode active material in the cathode active material layer. If multiple types of cathode active materials are used, the charge capacity for each material is calculated by multiplying its capacity density by its mass, and the total of these values is the charge capacity of the cathode active material layer. The charge capacity of the anode active material layer is calculated in the same manner. Specifically, the charge capacity of the anode active material layer is obtained by multiplying the charge capacity density (mAh/g) of the anode active material by the mass of the anode active material in the anode active material layer. When multiple types of anode active materials are used, the charge capacity for each material is calculated by multiplying its capacity density by its mass, and the total of these values is the charge capacity of the anode active material layer. Here, the charge capacity densities of the cathode and anode active materials are estimated using an all-solid-state half-cell in which lithium metal is used as the counter electrode. The charge capacities of the cathode active material layer and the anode active material layer are directly measured using charge capacity measurement with an all-solid-state half-cell. The measured charge capacity is divided by the mass of each active material to obtain the charge capacity density. Alternatively, the charge capacities of the cathode and anode active material layers may be the initial charge capacities measured during the first charge cycle.

[Lithium Battery]

A lithium battery according to an embodiment includes a cathode, an anode, and a separator disposed between the cathode and the anode. Such a lithium battery can simultaneously provide excellent cycle life characteristics. The lithium battery may be, for example, a lithium primary battery, a lithium secondary battery, a lithium-sulfur battery, or a lithium-air battery, but is not limited thereto and may include any lithium battery used in the art.

The lithium battery may be prepared by the following exemplary method, although it is not limited to such a method and may be adjusted according to the required conditions.

(Cathode)

First, a cathode active material composition is prepared by mixing a cathode active material, a conductive agent, a binder, and a solvent. The prepared cathode active material composition is directly coated and dried on an aluminum current collector to produce a cathode plate having a cathode active material layer. Alternatively, the cathode active material composition may be cast onto a separate support, and the resulting film obtained by peeling it off from the support may be laminated onto the aluminum current collector to produce a cathode plate having a cathode active material layer.

The cathode active material is a lithium-containing metal oxide and may be any material conventionally used in the art without limitation. For example, one or more lithium composite oxides containing cobalt, manganese, nickel, or a combination thereof may be used. Specific examples include compounds represented by the following formulas: $Li_aA_{1-b}B_bD_2$ (where $0.90 \le a \le 1$, and $0 \le b \le 0.5$); $Li_aE_{1-b}B_bO_{2-c}D_c$ (where $0.90 \le a \le 1$, $0 \le b \le 0.5$, $0 \le c \le 0.05$); $LiE_{2-b}B_bO_{4-c}D_c$ (where $0 \le b \le 0.5$, $0 \le c \le 0.05$); $Li_aNi_{1-b-c}Co_bB_cD_\alpha$ (where $0.90 \le a \le 1$, $0 \le b \le 0.5$, $0 \le c \le 0.05$, $0 < \alpha \le 2$); $Li_aNi_{1-b-c}Co_bB_cO_{2-\alpha}F_\alpha$ (where $0.90 \le a \le 1$, $0 \le b \le 0.5$, $0 \le c \le 0.05$, $0 < \alpha < 2$); $Li_aNi_{1-b-c}Co_bB_cO_{2-\alpha}F_2$ (where $0.90 \le a \le 1$, $0 \le b \le 0.5$, $0 \le c \le 0.05$, $0 < \alpha < 2$); $Li_aNi_{1-b-c}Mn_bB_cD_\alpha$ (where $0.90 \le a \le 1$, $0 \le b \le 0.5$, $0 \le c \le 0.05$, $0 < \alpha \le 2$); $Li_aNi_{1-b-c}Mn_bB_cO_{2-\alpha}F_\alpha$ (where $0.90 \le a \le 1$, $0 \le b \le 0.5$, $0 \le c \le 0.05$, $0 < \alpha < 2$); $Li_aNi_{1-b-c}Mn_bB_cO_{2-\alpha}F_2$ (where $0.90 \le a \le 1$, $0 \le b \le 0.5$, $0 \le c \le 0.05$, $0 < \alpha < 2$); $Li_aNi_bE_cG_dO_2$ (where $0.90 \le a \le 1$, $0 \le b \le 0.9$, $0 \le c \le 0.5$, $0.001 \le d \le 0.1$); $Li_aNi_bCo_cMn_dGeO_2$ (where $0.90 \le a \le 1$, $0 \le b \le 0.9$, $0 \le c \le 0.5$, $0 \le d \le 0.5$, $0.001 \le e \le 0.1$); $Li_aNiG_bO_2$ (where $0.90 \le a \le 1$, $0.001 \le b \le 0.1$); $Li_aCoG_bO_2$ (where $0.90 \le a \le 1$, $0.001 \le b \le 0.1$); $Li_aMnG_bO_2$ (where $0.90 \le a \le 1$, $0.001 \le b \le 0.1$); $Li_aMn_2G_bO_4$ (where $0.90 \le a \le 1$, $0.001 \le b \le 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the chemical formulas representing the above-described compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use compounds in which a coating layer is added to the surface of the above compounds, as well as mixtures of the above compounds and compounds with a coating layer. The coating layer added to the surface of the above-described compounds includes, for example, a compound of the coating element such as an oxide, hydroxide, oxyhydroxide, oxycarbonate, or hydroxycarbonate of the coating element. The compound forming the coating layer may be amorphous or crystalline. The coating element included in the coating layer may be Mg, Al, Co, K, Na, Ca, Si, Ti, V, Sn, Ge, Ga, B, As, Zr, or a mixture thereof. The method for forming the coating layer is selected within a range that does not adversely affect the physical properties of the cathode active material. Examples of the coating method include spray coating and dipping. Since the specific coating methods are well understood by those skilled in the art, detailed explanations are omitted.

The cathode active material may include, for example, compounds represented by the following formulas: $Li_aNi_xCo_yM_zO_{2-b}A_b$ ($1.0 \le a \le 1.2$, $0 \le b \le 0.2$, $0.8 \le x < 1$, $0 < y \le 0.3$, $0 < z \le 0.3$, and $x + y + z = 1$, where M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof); $LiNi_xCo_yMn_zO_2$ ($0.8 \le x \le 0.95$, $0 \le y \le 0.2$, $0 < z \le 0.2$ and $x+y+z=1$), $LiNi_xCo_yAl_zO_2$ ($0.8 \le x \le 0.95$, $0 \le y \le 0.2$, $0 < z \le 0.2$ and $x+y+z=1$), $LiNi_xCo_yMn_zAl_wO_2$ ($0.8 \le x \le 0.95$, $0 \le y \le 0.2$, $0 < z \le 0.2$, $0 < w \le 0.2$, and $x+y+z+w=1$), $Li_aCo_{x-}M_yO_{2-b}A_b$ ($1.0 \le a \le 1.2$, $0 \le b \le 0.2$, $0.9 \le x \le 1$, $0 \le y \le 0.1$, and $x+y=1$, where M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof); $Li_aNi_xMn_yM'_zO_{2-b}A_b$ ($1.0 \le a \le 1.2$, $0 \le b \le 0.2$, $0 < x \le 0.3$, $0.5 \le y < 1$, $0 < z \le 0.3$, and $x + y + z = 1$, where M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof); $Li_aM1_xM2_yPO_{4-b}X_b$ (where $0.90 \le a \le 1.1$, $0 \le x \le 0.9$, $0 \le y \le 0.5$, $0.9 < x + y < 1.1$, $0 \le b \le 2$, where M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof); $Li_aM3_zPO_4$ (where $0.90 \le a \le 1.1$, $0.9 \le z \le 1.1$, and M3 is chromium (Cr), manganese (Mn), iron (Fe), cobalt (Co), nickel (Ni), copper (Cu), zirconium (Zr), or a combination thereof).

The conductive agent may include carbon black, fine graphite particles, natural graphite, artificial graphite, acetylene black, ketjen black, carbon fiber, carbon nanotubes, metal powders, metal fibers, or metal tubes such as copper, nickel, aluminum, and silver, or conductive polymers such as polyphenylene derivatives, but is not limited thereto. Any material commonly used as a conductive agent in the art may be used. Alternatively, the cathode may not include a separate conductive agent.

The binder may include a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene-butadiene rubber-based polymer, or the like. The solvent may include N-methylpyrrolidone (NMP), acetone, water, or any solvent commonly used in the art, and is not limited thereto.

It is also possible to add a plasticizer or pore-forming agent to the cathode active material composition to create pores inside the electrode plate.

The content of the cathode active material, conductive agent, binder, and solvent used in the cathode is at a level conventionally used in lithium batteries. Depending on the application and configuration of the lithium battery, one or more of the conductive agent, binder, and solvent may be omitted.

The content of the binder in the cathode may be 0.1 wt% to 10 wt% or 0.1 wt% to 5 wt% based on the total weight of the cathode active material layer. The content of the cathode active material in the cathode may be 80 wt% to 99 wt%, 90 wt% to 99 wt%, or 95 wt% to 99 wt% based on the total weight of the cathode active material layer.

The cathode current collector may be, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The cathode current collector may be omitted. The thickness of the cathode current collector may be, for example, 1 $\mu$m to 100 $\mu$m, 1 $\mu$m to 50 $\mu$m, 5 $\mu$m to 25 $\mu$m, or 10 $\mu$m to 20 $\mu$m.

The cathode current collector may include a base film and a metal layer disposed on one or both sides of the base film. The base film may include, for example, a polymer. The polymer may include, for example, polyethylene terephthalate (PET), polyethylene (PE), polypropylene (PP), polybutylene terephthalate (PBT), polyimide (PI), or a combination thereof. The metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. By having such a structure, the cathode current collector can reduce the weight of the electrode and consequently improve the energy density of the lithium battery.

(Separator)

Next, a separator to be inserted between the cathode and the anode is prepared.

Any separator conventionally used in lithium batteries may be employed. The separator preferably exhibits low resistance to ion transport of the electrolyte and excellent electrolyte retention capability. The separator may be selected from glass fiber, polyester, Teflon, polyethylene, polypropylene, polytetrafluoroethylene (PTFE), or a combination thereof, and may be in the form of a nonwoven or woven fabric. In lithium-ion batteries, windable separators such as polyethylene or polypropylene are typically used, while in lithium-ion polymer batteries, separators with excellent organic electrolyte absorption capability are preferred.

The separator may be prepared by the following exemplary method, although it is not limited thereto and may be adjusted according to the required conditions.

First, a separator composition is prepared by mixing a polymer resin, a filler, and a solvent. The separator composition may be directly coated and dried on the surface of the electrode to form the separator. Alternatively, the separator composition may be cast and dried on a support, and the resulting separator film peeled from the support may be laminated onto the surface of the electrode to form the separator.

The polymer used in the preparation of the separator is not particularly limited, and any polymer that is used as a binder in electrode plates may be employed. Examples include vinylidene fluoride/hexafluoropropylene copolymer, polyvinylidene fluoride (PVDF), polyacrylonitrile, polymethyl methacrylate, or a mixture thereof.

(Anode)

The anode includes an anode current collector.

In an embodiment of the present disclosure, the anode current collector may include a base film and a metal layer disposed on one or both sides of the base film. The base film may include, for example, a polymer. The polymer may be, for example, a thermoplastic polymer. Examples of the polymer include polyethylene terephthalate (PET), polyethylene (PE), polypropylene (PP), polybutylene terephthalate (PBT), polyimide (PI), or a combination thereof. Since the base film includes a thermoplastic polymer, it can liquefy in the event of a short circuit, thereby suppressing a rapid increase in current. The base film may be, for example, an insulator. The metal layer may include copper (Cu), stainless steel, titanium (Ti), iron (Fe), cobalt (Co), nickel (Ni), or an alloy thereof. The metal layer may function as an electrochemical fuse and be severed under overcurrent conditions to prevent short circuits. By adjusting the thickness of the metal layer, the threshold current and maximum current can be controlled. The metal layer may be plated or deposited on the base film. When the thickness of the metal layer is reduced, the threshold current and/or maximum current of the anode current collector 521b, 522b also decrease, which can enhance the safety of the lithium battery in the event of a short circuit. A lead tab may be additionally provided on the metal layer for external connection. The lead tab may be welded to the metal layer or to a laminate of the metal layer and the base film by ultrasonic welding, laser welding, or spot welding. During welding, the base film and/or the metal layer may melt, allowing the metal layer to be electrically connected to the lead tab. To further reinforce the weld between the metal layer and the lead tab, a metal chip may be added between the metal layer and the lead tab. The metal chip may be a thin chip made of the same material as the metal of the metal layer. The metal chip may be, for example, a metal foil or a metal mesh. Examples of the metal chip include aluminum foil, copper foil, and SUS foil. The lead tab may be welded to a laminate of the metal chip and the metal layer, or to a laminate of the metal chip, the metal layer, and the base film, by placing the metal chip on the metal layer and performing welding. During welding, the base film, the metal layer, and/or the metal chip may melt, allowing the metal layer or the metal layer/metal chip laminate to be electrically connected to the lead tab. A metal chip and/or a lead tab may be additionally provided on a portion of the metal layer. The thickness of the base film may be, for example, 1 to 50 $\mu$m, 1.5 to 50 $\mu$m, 1.5 to 40 $\mu$m, or 1 to 30 $\mu$m. Having the base film within this thickness range can more effectively reduce the weight of the electrode assembly. The melting point of the base film may be, for example, 100 °C to 300 °C, 100 to 250 °C, or 100 °C to 200 °C. When the base film has a melting point within this range, it can melt during the welding of the lead tab, thereby allowing for easy bonding with the lead tab. To improve adhesion between the base film and the metal layer, surface treatment such as corona treatment may be performed on the base film. The thickness of the metal layer may be, for example, 0.01 to 3 $\mu$m, 0.1 to 3 $\mu$m, 0.1 to 2 $\mu$m, or 0.1 to 1 $\mu$m. Having the metal layer within this thickness range allows for maintaining conductivity while ensuring the stability of the electrode assembly. The thickness of the metal chip may be, for example, 2 to 10 $\mu$m, 2 to 7 $\mu$m, or 4 to 6 $\mu$m. When the metal chip has a thickness within this range, the connection between the metal layer and the lead tab can be more readily achieved. By adopting such a structure for the anode current collector 521b, 522b, the weight of the electrode can be reduced, thereby improving the energy density.

An anode active material layer may be formed on the anode current collector. The anode active material layer may be formed as a lithium plating layer after charging. Alternatively, the anode active material layer may be formed using an anode active material at the time of assembling the battery.

The method for forming the anode active material layer using an anode active material may be implemented in the same manner as for the cathode active material layer, except that the anode active material is used instead of the cathode active material.

The lithium battery may further include a thin film disposed on one surface of the anode current collector, the thin film containing an element capable of forming an alloy with lithium. The thin film is disposed between the anode current collector and the anode active material layer. The thin film includes, for example, an element capable of forming an alloy with lithium. Such an element may include, for example, gold, silver, zinc, tin, indium, silicon, aluminum, or bismuth, but is not limited thereto. Any element known in the art to form an alloy with lithium may be used. The thin film may be composed of a single one of these metals or an alloy of two or more thereof. When the thin film is disposed on one surface of the anode current collector, the deposition morphology of the first anode active material layer deposited between the thin film and the anode active material layer may become more planar, thereby improving the cycle characteristics of the lithium battery.

(Separator)

A separator according to an embodiment is used.

The organic electrolyte is prepared, for example, by dissolving a lithium salt in an organic solvent.

Any solvent commonly used as an organic solvent in the art may be employed. The organic solvent may include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

Any lithium salt commonly used in the art may be used. Examples of lithium salts include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \leq x \leq 20$, $1 \leq y \leq 20$), LiCl, LiI or a mixture thereof. The concentration of the lithium salt may be, for example, 0.1 M to 5.0 M.

The lithium battery according to an embodiment may further include a solid electrolyte. The solid electrolyte may be, for example, an oxide-based solid electrolyte, a sulfide-based solid electrolyte, or a combination thereof.

The solid electrolyte may be, for example, an oxide-based solid electrolyte. The oxide-based solid electrolyte may include one or more selected from the group consisting of $Li_{1+x+y}Al_xTi_{2-x}Si_yP_{3-y}O_{12}$ ($0<x<2$, $0 \leq y<3$), $Li_3PO_4$, $Li_xTi_y$

$(PO_4)_3$ (0<x<2, 0<y<3), $Li_xAl_yTi_z(PO_4)_3$ (0<x<2, 0<y<1, 0<z<3), $Li_{1+x+y}(Al, Ga)_x(Ti, Ge)_{2-x}SiyP_{3-y}O_{12}$ ($0 \le x \le 1$ $0 \le y \le 1$), $Li_xLa_yTiO_3$ (0<x<2, 0<y<3), $Li_2O$, $LiOH$, $Li_2CO_3$, $LiAlO_2$, $Li_2O\text{-}Al_2O_3\text{-}SiO_2\text{-}P_2O_5\text{-}TiO_2\text{-}GeO_2$, $Li_{3+x}La_3M_2O_{12}$ (where M = Te, Nb, or Zr, and x is an integer from 1 to 10). The solid electrolyte may be produced by a sintering method or the like. For example, the oxide-based solid electrolyte may be a garnet-type solid electrolyte selected from $Li_7La_3Zr_2O_{12}$ (LLZO) and $Li_{3+x}La_3Zr_{2-a}M_aO_{12}$ (M-doped LLZO, where M = Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ or $P_2S_5$. The sulfide-based solid electrolyte particles are known to have higher lithium-ion conductivity compared to other inorganic compounds. For example, the sulfide-based solid electrolyte may include $Li_2S$ and $P_2S_5$. When the sulfide-based solid electrolyte material constituting the sulfide-based solid electrolyte includes $Li_2S\text{-}P_2S_5$, the molar ratio of $Li_2S$ to $P_2S_5$ may be in the range of about 50:50 to about 90:10. In addition, inorganic solid electrolytes prepared by adding $Li_3PO_4$, halogens, halogen compounds, $Li_{2+2x}Zn_{1??x}GeO_4$ ("LISICON", 0≤x<1), $Li_{3+y}PO_{4-x}N_x$ ("LIPON", 0<x<4, 0<y<3), $Li_{3.25}Ge_{0.25}P_{0.75}S_4$ ("Thio-LISICON"), $Li_2O\text{-}Al_2O_3\text{-}TiO_2\text{-}P_2O_5$ ("LATP") to $Li_2S\text{-}P_2S_5$, $SiS_2$, $GeS_2$, $B_2S_3$, or a combination thereof may be used as sulfide-based solid electrolytes. Non-limiting examples of sulfide-based solid electrolyte materials include: $Li_2S\text{-}P_2S_5$; $Li_2S\text{-}P_2S_5\text{-}LiX$ (where X is a halogen element); $Li_2S\text{-}P_2S_5\text{-}Li_2O$; $Li_2S\text{-}P_2S_5\text{-}Li_2O\text{-}LiI$; $Li_2S\text{-}SiS_2$; $Li_2S\text{-}SiS_2\text{-}LiI$; $Li_2S\text{-}SiS_2\text{-}LiBr$; $Li_2S\text{-}SiS_2\text{-}LiCl$; $Li_2S\text{-}SiS_2\text{-}B_2S_3\text{-}LiI$; $Li_2S\text{-}SiS_2\text{-}P_2S_5\text{-}LiI$; $Li_2S\text{-}B_2S_3$; $Li_2S$ $\text{-}P_2S_5\text{-}Z_mS_n$ (0<m<10, 0<n<10, Z=Ge, Zn or Ga); $Li_2S\text{-}GeS_2$; $Li_2S\text{-}SiS_2\text{-}Li_3PO_4$; and $Li_2S\text{-}SiS_2\text{-}Li_pMO_q$ (0<p<10, 0<q<10, M = P, Si, Ge, B, Al, Ga, or In). In this context, the sulfide-based solid electrolyte material may be prepared by processing a starting material of a sulfide-based solid electrolyte (e.g., $Li_2S$, $P_2S_5$, etc.) by a melt quenching method, mechanical milling, or the like. Additionally, a calcination process may be performed after such treatment. The sulfide-based solid electrolyte may be amorphous, crystalline, or a mixture of both.

(Lithium Battery)

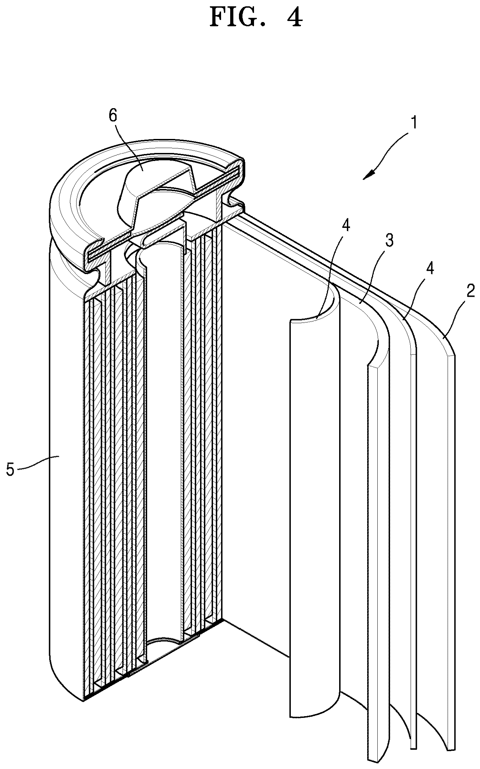

Referring to FIG. 4, a lithium battery 1 according to an embodiment includes a cathode 3, an anode 2, and a separator 4. The cathode 3, the anode 2, and the separator 4 are wound or folded to form a cell structure 7. The formed cell structure 7 is housed in a battery case 5. An organic electrolyte is injected into battery case 5, and the case is sealed with a cap assembly 6, thereby completing the lithium battery 1. The battery case 5 may be cylindrical, but is not limited to this shape and may be, for example, prismatic, thin-film, or other shapes.

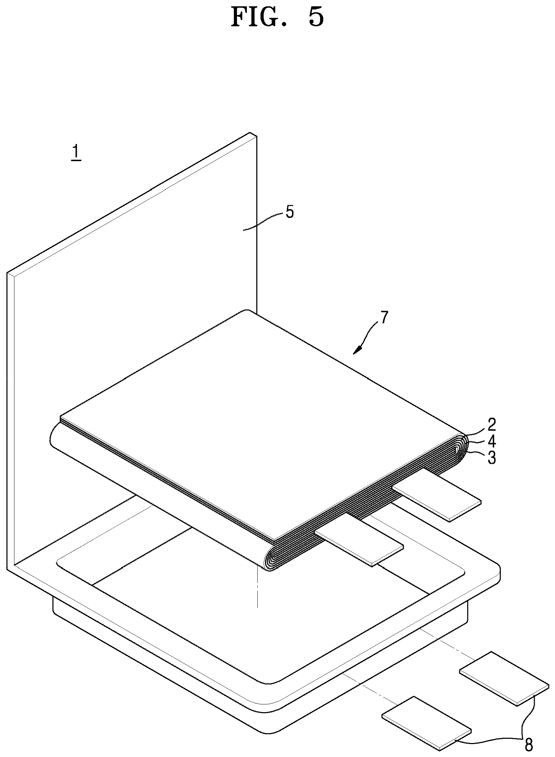

Referring to FIG. 5, a lithium battery 1 according to an embodiment includes a cathode 3, an anode 2, and a separator 4. The separator 4 is disposed between the cathode 3 and the anode 2, and the cathode 3, the anode 2, and the separator 4 are wound or folded to form a cell structure 7. The formed cell structure 7 is housed in the battery case 5. The lithium battery 1 may include an electrode tab 8 that functions as an electrical pathway to guide the current generated in the cell structure 7 to the outside. An organic electrolyte is injected into the battery case 5 and sealed to complete the lithium battery 1. The battery case 5 is prismatic but is not limited to this shape and may be, for example, cylindrical, thin-film, or other forms.

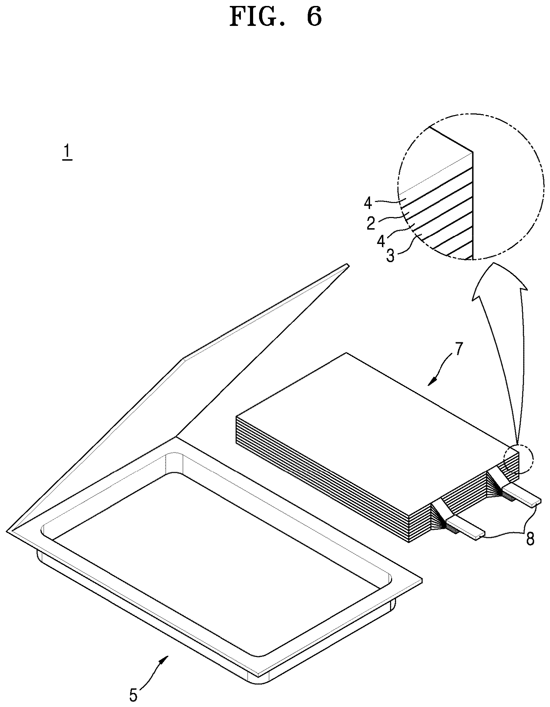

Referring to FIG. 6, a lithium battery 1 according to an embodiment includes a cathode 3, an anode 2, and a separator 4. The separator 4 is disposed between the cathode 3 and the anode 2 to form a cell structure. The cell structure 7 is stacked in a bi-cell configuration and housed in a battery case 5. The lithium battery 1 may include an electrode tab 8 that serves as an electrical pathway for guiding the current generated in the cell structure 7 to the outside. An organic electrolyte is injected into battery case 5, and the case is sealed, thereby completing the lithium battery 1. The battery case 5 is prismatic, but is not limited to this shape and may be, for example, cylindrical, thin-film, or other shapes.

In the lithium batteries of FIGS. 4 to 6, the gel polymer electrolyte is not shown in the drawings, but is present between the separator 4 and the cathode 3.

The pouch-type lithium battery corresponds to the lithium batteries of FIGS. 5 and 6 in which a pouch is used as the battery case. The pouch-type lithium battery includes one or more cell structures. A separator is disposed between the cathode and the anode to form a cell structure. The cell structure is stacked in a bi-cell configuration, then impregnated with an organic electrolyte, housed in a pouch, and sealed to complete the pouch-type lithium battery. For example, although not shown in the drawings, the aforementioned cathode, anode, and separator may be simply stacked and housed in the pouch in the form of an electrode assembly, or may be wound or folded into a jelly-roll type electrode assembly and housed in the pouch. Subsequently, an organic electrolyte is injected into the pouch, and the pouch is sealed to complete the lithium battery.

Owing to its excellent discharge capacity, long cycle life, and high energy density, the lithium battery of the present disclosure can be used, for example, in electric vehicles (EVs). For example, the lithium battery is used in hybrid vehicles such as plug-in hybrid electric vehicles (PHEVs). The lithium battery is also used in fields requiring large amounts of power storage. For example, the lithium battery is used in electric bicycles, power tools, and the like.

Multiple lithium batteries may be stacked to form a battery module, and multiple battery modules may be combined to form a battery pack. Such battery packs may be used in any device requiring high capacity and high power output. For example, the battery pack may be used in laptops, smartphones, electric vehicles, and the like. The battery module may include, for example, a plurality of batteries and a frame securing these batteries. The battery pack may include, for example, a plurality of battery modules and a bus bar connecting these battery modules. The battery module and/or battery pack may further include a cooling device. A plurality of battery packs may be managed by a battery management system. The battery management system includes the battery pack and a battery-control device connected to the battery pack.

[Method of Preparing Lithium Battery]

A lithium battery according to an embodiment may be prepared by: preparing an anode current collector; arranging a separator on one surface of the anode current collector to fabricate an anode current collector/separator structure; injecting a gel polymer electrolyte-forming composition into the anode current collector/separator structure and heat-treating the structure to obtain an integrated anode current collector/separator structure containing a gel polymer electrolyte; preparing a cathode; placing the cathode on the integrated anode current collector/separator structure containing the gel polymer electrolyte to form a cell structure; and housing the cell structure in a battery case.

The gel polymer electrolyte-forming composition includes a crosslinkable monomer, a lithium salt, an organic solvent, and an initiator.

Injection of the gel polymer electrolyte-forming composition into the cell structure may be carried out as an impregnation process under vacuum so that the composition can adequately infiltrate the pores of the porous substrate.

The gel polymer electrolyte may be formed by curing using heat, UV light, or high-energy radiation (such as electron beams or $\gamma$-rays). Thermal curing may be performed at a temperature of 40 °C to 120 °C, 45 °C to 100 °C, or for example, 50 °C to 90 °C, for 30 minutes to 180 minutes.

Although the heat treatment conditions may vary depending on the type of crosslinkable monomer used, it is generally performed at 40 °C to 120°C. When the heat treatment is performed within the above temperature range, a lithium battery capable of effectively suppressing high-temperature shrinkage of the separator can be produced.

In the housing of the cell structure in the battery case, a liquid electrolyte containing a lithium salt and an organic solvent may be injected. Additionally, one or more of an anode active-material layer and a protective layer may further be included between the anode current collector and the separator.

The lithium battery according to an embodiment may be, for example, a lithium-ion battery or a lithium metal battery.

In an embodiment, after the battery is assembled and subjected to repeated charge and discharge cycles, the cathode, separator, and anode can be taken apart such that the separator detaches from the anode while the cathode and the separator remain integrated.

The present inventive concept will now be described in more detail through the following examples and comparative examples. However, the examples are intended to illustrate the present inventive concept and should not be construed as limiting the scope of the inventive concept.

Example 1: Gel polymer electrolyte (GPE) with 3 % Crosslinked Polymer Content

A separator was laminated on a 10 $\mu$m-thick copper foil as the anode current collector, and the resulting stack was applied on

one surface of a 20 $\mu$m-thick polyethylene single-layer base film used as the porous substrate to prepare an anode current collector/separator structure.

A gel polymer electrolyte-forming composition was injected into the structure and heat-treated at about 70 °C for about 120 minutes to perform thermal curing, thereby producing an integrated anode current collector/separator structure containing the gel polymer electrolyte (GPE).

A cathode was laminated on top of the structure, the assembly was accomodated in a battery case, and a liquid electrolyte was supplied, thereby producing a lithium metal battery.

The content of the crosslinked polymer in the gel polymer electrolyte is 3 wt%, based on the total weight of the liquid electrolyte and the crosslinked polymer. The gel polymer electrolyte-forming composition was prepared by mixing trimethylolpropane triacrylate (TMPTA) as the crosslinkable monomer; a liquid electrolyte consisting of a mixed solvent of ethylene carbonate (EC), dimethyl carbonate (DMC), and ethyl methyl carbonate (EMC) in a weight ratio of 1 : 1 : 0.5 with 1.3 M $LiPF_6$ dissolved therein; and benzoin ethyl ether (Sigma-Aldrich, 240.30 g/mol) as the initiator. In the gel polymer electrolyte-forming composition, a total content of the crosslinkable monomer and liquid electrolyte was 97 parts by weight based on the total 100 parts by weight of the gel polymer electrolyte-forming composition, and the content of the initiator was 3 parts by weight based on 100 parts by weight of the crosslinkable monomer.

The cathode was prepared as follows.

$Li_{1.04}Ni_{0.88}Co_{0.1}Al_{0.02}O_2$ powder and a carbon-based conductive agent (Super-P; Timcal Ltd.) were uniformly mixed at a weight ratio of 90:5. A PVDF (polyvinylidene fluoride) binder solution was then added to prepare a cathode active material slurry with a weight ratio of active material: carbon-based conductive agent:binder = 90:5:5.

The prepared slurry was coated on an aluminum substrate having a thickness of 15 $\mu$m using a doctor blade, dried under reduced pressure at 120°C, and then rollpressed into a sheet form to prepare the cathode.

In the lithium battery, the pores of the separator contained the gel polymer electrolyte, and the anode current collector/separator was formed as an integrated structure.

Example 2

A lithium battery was prepared in the same manner as in Example 1, except that the content of the crosslinkable monomer in the gel polymer electrolyte-forming composition was changed to 5 parts by weight based on 100 parts by weight of the composition, such that the content of the crosslinked polymer in the gel polymer electrolyte was 5 wt% based on the total content of the gel polymer electrolyte.

Example 3

A lithium battery was prepared in the same manner as in Example 1, except that the content of the crosslinkable monomer in the gel polymer electrolyte-forming composition was changed to 10 parts by weight based on 100 parts by weight of the composition, such that the content of the crosslinked polymer in the gel polymer electrolyte was 10 wt% based on the total content of the gel polymer electrolyte.

Example 4

A lithium battery was prepared in the same manner as in Example 1, except that the content of the crosslinkable monomer in the gel polymer electrolyte-forming composition was changed to 8 parts by weight based on 100 parts by weight of the composition, such that the content of the crosslinked polymer in the gel polymer electrolyte was 8 wt% based on the total content of the gel polymer electrolyte.

Example 5

A lithium battery was prepared in the same manner as in Example 1, except that polyethylene glycol dimethacrylate was used as the crosslinkable monomer instead of trimethylolpropane triacrylate during preparation of the gel polymer electrolyte.

Comparative Example 1

A gel polymer electrolyte was prepared on one surface of a separator by injecting the gel polymer electrolyte-forming composition prepared in

Example 1 onto a 5.5 $\mu$m-thick polyethylene single-layer base film, which was used as a porous substrate, and then heat-treating the resultant product at 70°C for 120 minutes. On the other surface of the separator, a 10 $\mu$m-thick copper foil serving as the anode current collector, was laminated.

Subsequently, a cathode was laminated on top of the gel polymer electrolyte to produce a laminate. This laminate was accomodated in a battery case, and a liquid electrolyte was supplied to fabricate the lithium battery.

The same cathode as in Example 1 and the same liquid electrolyte as in Example 1 were used.

In this lithium battery, the anode current collector and the separator had a separate-type structure. The content of the crosslinked polymer in the gel polymer electrolyte was 3 wt% based on the total weight of the gel polymer electrolyte.

Comparative Example 2

A lithium battery was prepared in the same manner as in Comparative Example 1, except that the content of the crosslinked polymer in the gel polymer electrolyte was changed to 3 wt% based on the total weight of the gel polymer electrolyte.

Comparative Example 3

A lithium battery was prepared in the same manner as in Comparative Example 1, except that the content of the crosslinked polymer in the gel polymer electrolyte was changed to 5 wt% based on the total weight of the gel polymer electrolyte.

Comparative Example 4

A lithium battery was prepared in the same manner as in Comparative Example 1, except that the content of the crosslinked polymer in the gel polymer electrolyte was changed to 10 wt% based on the total weight of the gel polymer electrolyte.

Evaluation Example 1: Thermal Shrinkage Test of Separator

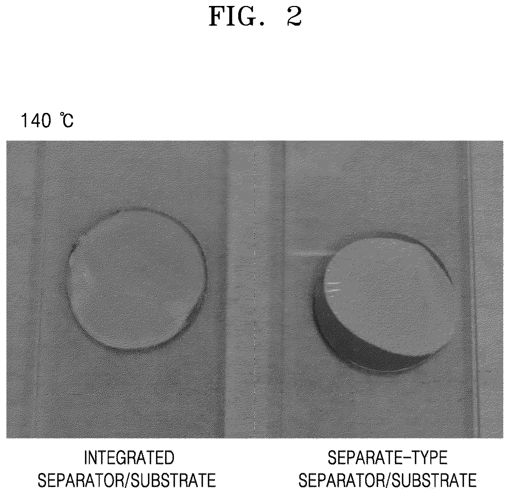

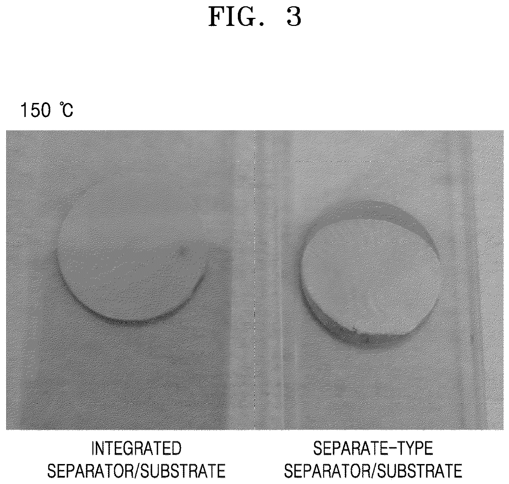

The integrated anode current collector/separator structure prepared in Example 1 and the separate-type anode current collector/separator structure prepared in Comparative Example 1 were stored in a chamber at 140 °C or 150 °C for 1 hour. The degree of shrinkage was then measured, and the results are shown in FIGS. 2 and 3.
FIG. 2 shows the thermal shrinkage test results after storage at 140 °C for 1 hour, and FIG. 3 shows the thermal shrinkage test results after storage in a chamber at 150 °C for 1 hour.
These figures indicate that the integrated anode current collector/separator structure of Example 1, where the gel polymer electrolyte (GPE) was cured with the separator and substrate (anode current collector) integrated, achieved greater suppression of thermal shrinkage and therefore improved stability compared with Comparative Example 1, in which the separator was first impregnated with GPE, cured, and then combined with the anode current collector before the thermal-shrinkage test.

Evaluation Example 2: Initial Interfacial Adhesion

The initial interfacial adhesion between the anode current collector and the separator was evaluated in the lithium batteries of Examples 1 to 5 and Comparative Examples 1 to 4. The results are shown in Table 3.
The initial interfacial adhesion was assessed by fixing a tape (26 mm × 76 mm) on top of the separator integrated with the anode substrate and measuring the peel strength using an Instron 3342 apparatus. The tape and the anode substrate were pulled in a T-shaped configuration at a speed of 60 mm/min under a load of 0.5 kgf.

[Table 1]

| Item | Initial Interfacial Adhesion (gf/cm) |
|---|---|
| Example 1 | 0.33 |
| Example 2 | 0.33 |
| Example 3 | 0.38 |
| Example 4 | 0.43 |
| Example 5 | 0.56 |
| Comparative Example 1 | 0.10 |
| Comparative Example 2 | 0.09 |
| Comparative Example 3 | 0.12 |
| Comparative Example 4 | 0.14 |

Referring to Table 1, it was confirmed that the initial interfacial adhesion between the anode current collector and the separator in the structures of Examples 1 to 5 was significantly improved compared to the structures of Comparative Examples 1 to 4.

Evaluation Example 3: Interfacial Adhesion Strength After Charge and Discharge

The lithium batteries prepared according to Examples 1 to 5 and Comparative Examples 1 to 4 were charged and discharged under the conditions described below.
Each cell was charged at 25 °C with a constant current of 0.1 C until the voltage reached 4.2 V (vs Li), then held at 4.2 V in constant-voltage mode until the current declined to 0.05 C. The cell was subsequently discharged at a constant current of 0.1 C to 3.0 V (formation cycle).
After formation, the lithium battery was charged again at 25 °C with a constant current of 0.2 C to 4.2 V (vs Li) and then held at 4.2 V in constant-voltage mode until the current reached the 0.05 C cut-off level. Subsequently, the battery was discharged at a constant current of 0.2 C to 3.0 V (vs. Li) (1st cycle). This sequence was repeated under identical conditions up to the 100th cycle.

During every charge-discharge cycle, a rest period of ten minutes was provided after every charge step and after every discharge step.

Upon completion of charge-discharge, the interfacial adhesion between the anode current collector and the separator was measured for all batteries from Examples 1 to 5 and Comparative Examples 1 to 4 using the Initial Interfacial Adhesion test described in Evaluation Example 2, and the results are shown in Table 2.

[Table 2]

| Item | Interfacial Adhesion after Charge-Discharge (gf/cm) |
| --- | --- |
| Example 1 | 0.11 |
| Example 2 | 0.13 |
| Example 3 | 0.17 |
| Example 4 | 0.21 |
| Example 5 | 0.29 |
| Comparative Example 1 | N/A |
| Comparative Example 2 | 0.02 |
| Comparative Example 3 | 0.05 |
| Comparative Example 4 | 0.08 |

Referring to Table 2, the adhesion between the anode current collector and the separator in the batteries from Examples 1 to 5 remained superior to that in Comparative Examples 1 to 4 even after the charge-discharge cycling.

Evaluation Example 3: Room-Temperature (25 °C) Cycle Life

The charge-discharge characteristics of the lithium batteries from Examples 1-5 and Comparative Examples 1-4 were evaluated under the conditions described below.

Each cell was charged at 25 °C with a constant current of 0.1 C until the voltage reached 4.2 V (vs Li), then held at 4.2 V in constant-voltage mode until the current declined to 0.05 C. The cell was subsequently discharged at a constant current of 0.1 C to 3.0 V (formation cycle).

After formation, the lithium battery was charged again at 25 °C with a constant current of 0.1 C to 4.3 V (vs Li) and then held at 4.3 V in constant-voltage mode until the current reached the 0.05 C cut-off level. Subsequently, the battery was discharged at a constant current of 0.1 C to 3.0 V (vs. Li) (1st cycle). This sequence was repeated under identical conditions up to the 100th cycle.

During every charge-discharge cycle, a rest period of ten minutes was provided after every charge step and after every discharge step. Selected results from the room temperature charge-discharge experiments are presented in Table 3.

The capacity retention rate is defined by Equation 1 below.

Capacity retention rate [%] = [Discharge capacity at 100th cycle / Discharge capacity at 1st cycle] $\times$ 100     <Equation 1>

[Table 3]

| Item | Capacity retention [%] | Item | Capacity retention [%] |
| --- | --- | --- | --- |
| Example 1 | 81.2 | Comparative Example 1 | 62.4 |
| Example 2 | 82.3 | Comparative Example 2 | 68.3 |
| Example 3 | 73.5 | Comparative Example 3 | < 10 |
| Example 4 | 59.8 | Comparative Example 4 | < 10 |

(continued)

| Item | Capacity retention [%] | Item | Capacity retention [%] |
|---|---|---|---|
| Example 5 | 70.2 | | |

As shown in Table 3, the lithium batteries of Examples 1 to 5 exhibited improved capacity retention characteristics compared to Comparative Examples 1 to 4. These results are attributed to the integrated structure of the anode current collector, separator, and gel polymer electrolyte, which improves the thermal stability of the separator and reduces interfacial resistance.

Evaluation Example 4: High-Rate Characteristics

The lithium batteries prepared according to Examples 1 to 4 and Comparative Examples 1 and 2 were subjected to first and second charge-discharge cycles and cycling charge-discharge at 25 °C.

The batteries prepared according to Examples 1 to 4 and Comparative Example 1 were each charged at 0.1 C CC to 4.7 V and then discharged at a constant current of 0.1 C to 2.5 V.

From the second charge onward, the batteries were charged at 4.6 V CC/CV 0.5 C until the current reached 0.05 C, then discharged at 2.5 V at 0.2 C/1 C/2 C. For cycle evaluation, the batteries were charged at 4.6 V CC 1 C and then discharged 50 times at 2.5 V 1 C.

The above-described cycle was performed 50 times.

The high-rate characteristics are expressed by Equation 2 below.

High-rate characteristics = {(2 C discharge capacity)/(0.2 C discharge capacity)} × 100      [Equation 2]

The high-rate characteristics obtained from the charge-discharge performance evaluation of the lithium batteries prepared according to Examples 1 to 4 and Comparative Examples 1 and 2 are shown in Table 4 below.

[Table 4]

| Item | High-rate characteristics (2C/0.2C)(%) |
|---|---|
| Example 1 | 0.65 |
| Example 2 | 0.62 |
| Example 3 | 0.21 |
| Example 4 | 0.11 |
| Comparative Example 1 | 0.43 |
| Comparative Example 2 | 0.42 |

From Table 4, the high-rate characteristics of the lithium batteries prepared according to Examples 1 to 4 show improved results compared to the lithium batteries of Comparative Examples 1 and 2.

Although exemplary embodiments have been described in detail with reference to the accompanying drawings, the present inventive concept is not limited to these examples. It is apparent that those skilled in the art to which the present inventive concept belongs can derive various modifications or variations within the scope of the technical spirit described in the patent claims, and these naturally belong to the technical scope of the present inventive concept.

**Claims**

1. A lithium battery in which an anode current collector, a separator, and a cathode are sequentially disposed,

wherein an anode active material layer or a protective layer is absent between the anode current collector and the separator,
wherein the anode current collector and the separator form an integrated structure, and
wherein an initial adhesion strength at an interface between the anode current collector and the separator of the integrated structure is 0.15 gf/cm to 1.0 gf/cm.

2. The lithium battery of claim 1, wherein the separator is polyethylene, polypropylene, polyethylene terephthalate, polybutylene terephthalate, polyester, polyacetal, polyamide, polycarbonate, polyimide, polyether ether ketone, polyether sulfone, polyphenylene oxide, polyphenylene sulfide, polyethylene naphthalate, polyvinylidene fluoride, polyethylene oxide, polyacrylonitrile, a copolymer of polyvinylidene fluoride and hexafluoropropylene, or a combination thereof.

3. The lithium battery of claim 1, wherein, after charge and discharge of the lithium battery, an adhesion strength at an interface between the anode current collector and the separator of the integrated structure is 0.1 gf /cm to 0.3 gf /cm.

4. The lithium battery of claim 1, wherein a gel polymer electrolyte is disposed at an interface between the anode current collector and the separator.

5. The lithium battery of claim 1, wherein a gel polymer electrolyte is present within pores of the separator.

6. The lithium battery of claim 4, wherein the gel polymer electrolyte comprises: a liquid electrolyte containing an organic solvent and a lithium salt; and a crosslinked polymer.

7. The lithium battery of claim 6, wherein a weight ratio of the liquid electrolyte and the crosslinked polymer is 99 : 1 to 90 : 10.

8. The lithium battery of claim 6, wherein the crosslinked polymer is a polymerization product of a crosslinkable monomer, and
the crosslinkable monomer is diethylene-glycol diacrylate (DEGDA), diethylene-glycol dimethacrylate (DEGDMA), triethylene-glycol diacrylate (TEGDA), triethylene-glycol dimethacrylate (TEGDMA), tetraethyleneglycol diacrylate (TTEGDA), glycidyl methacrylate, polyethylene-glycol diacrylate (PEGDA), polyethylene-glycol dimethacrylate (PEGDMA), polypropylene-glycol diacrylate (PPGDA), dipropylene-glycol diacrylate (DPGDA), tripropylene-glycol diacrylate (TPGDA), dianol diacrylate (DDA), dianol dimethacrylate (DDMA), trimethylolpropane triacrylate (TMPTA), ethoxylated trimethylolpropane triacrylate (ETPTA), acrylate-functionalized ethylene oxide, butanediol dimethacrylate, ethoxylated neopentyl-glycol diacrylate (NPEOGDA), propoxylated neopentyl-glycol diacrylate (NPPOGDA), trimethylolpropane trimethacrylate (TMPTMA), pentaerythritol triacrylate (PETA), ethoxylated-propoxylated trimethylolpropane triacrylate (TMPEOTA or TMPPOTA), propoxylated glyceryl triacrylate, tris(2-hydroxyethyl)-isocyanurate triacrylate (THEICTA), pentaerythritol tetraacrylate (PETTA), dipentaerythritol pentaacrylate (DPEPA), ditrimethylolpropane tetraacrylate (DTMPTTA), a diglycidyl ester, diallyl suberate, acrylamide, divinylbenzene, or a combination thereof.

9. The lithium battery of claim 1, further comprising a liquid electrolyte containing a lithium salt and an organic solvent, a solid electrolyte, a semi-solid gel electrolyte, or a combination thereof,
wherein the liquid electrolyte is a cathode electrolyte.

10. The lithium battery of claim 1, further comprising an anode active-material layer between the anode current collector and the separator, the anode active-material layer having a thickness of 1 $\mu$m to 500 $\mu$m.

11. The lithium battery of claim 10, wherein the anode active-material layer comprises lithium-metal foil, lithium-metal powder, lithium-alloy foil, lithium-alloy powder, or a combination thereof, wherein the lithium alloy comprises lithium and a first metal.

12. The lithium battery of claim 11, wherein the first metal is indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel, iron, cobalt, chromium, cesium, sodium, potassium, calcium, yttrium, tantalum, hafnium, barium, vanadium, strontium, lanthanum, or a combination thereof.

13. The lithium battery of claim 1, wherein the integrated structure is an integrated anode current collector/separator structure containing a gel polymer electrolyte.

14. The lithium battery of claim 1, wherein the integrated structure is a product obtained by:
preparing an anode current collector; arranging a separator on one surface of the anode current collector to form an anode current collector/separator structure; and injecting into the anode current collector/separator structure a gel polymer electrolyte-forming composition comprising a crosslinkable monomer, a lithium salt, an organic solvent, and a polymerization initiator, and heat-treating the resulting structure.

15. The lithium battery of claim 1, further comprising a protective layer between the anode current collector and the separator.

16. The lithium battery of claim 1, wherein the cathode comprises a cathode current collector and a cathode active material layer, and

   at least one of the cathode current collector and the anode current collector comprises a base film and a metal layer disposed on one or both sides of the base film,
   wherein the base film comprises a polymer,
   the polymer comprising polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

17. A method of manufacturing a lithium battery, the method comprising:

   preparing an anode current collector;
   arranging a separator on one surface of the anode current collector to manufacture an anode current collector/separator structure;
   injecting a gel polymer electrolyte-forming composition into the anode current collector/separator structure and performing heat treatment to prepare an integrated anode current collector/separator structure containing the gel polymer electrolyte;
   preparing a cathode;
   forming a cell structure by disposing the cathode on top of the integrated anode current collector/separator structure containing the gel polymer electrolyte; and
   housing the cell structure in a battery case to thereby prepare the lithium battery of claim 1.

18. The method of claim 17, wherein the heat treatment is performed at a temperature of 40 °C to 120 °C.

19. The method of claim 17, wherein the gel polymer electrolyte-forming composition comprises a crosslinkable monomer, a lithium salt, an organic solvent, and an initiator.

20. The method of claim 17, wherein, during the housing of the cell structure in the battery case, a liquid electrolyte containing a lithium salt and an organic solvent is injected, and
   at least one selected from an anode active-material layer and a protective layer is further included between the anode current collector and the separator.

FIG. 1

# FIG. 2

140 ℃

INTEGRATED
SEPARATOR/SUBSTRATE

SEPARATE-TYPE
SEPARATOR/SUBSTRATE

# FIG. 3

150 ℃

| INTEGRATED | SEPARATE-TYPE |
| SEPARATOR/SUBSTRATE | SEPARATOR/SUBSTRATE |

# FIG. 4

# FIG. 5

# FIG. 6

## INTERNATIONAL SEARCH REPORT

| International application No. |
|---|
| **PCT/KR2024/003725** |

**A.    CLASSIFICATION OF SUBJECT MATTER**

**H01M 10/0585**(2010.01)i; **H01M 50/46**(2021.01)i; **H01M 50/414**(2021.01)i; **H01M 10/0565**(2010.01)i; **H01M 10/052**(2010.01)i; **H01M 4/13**(2010.01)i; **H01M 4/62**(2006.01)i; **H01M 4/38**(2006.01)i; **H01M 4/587**(2010.01)i; **H01M 4/66**(2006.01)i

According to International Patent Classification (IPC) or to both national classification and IPC

**B.    FIELDS SEARCHED**

Minimum documentation searched (classification system followed by classification symbols)

H01M 10/0585(2010.01); H01M 10/052(2010.01); H01M 10/0525(2010.01); H01M 10/058(2010.01); H01M 12/08(2006.01); H01M 4/13(2010.01); H01M 50/572(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 전지 (lithium battery), 겔형 고분자 전해질 (gel polymer electrolyte), 가교 고분자 (cross linked polymer), 박리 강도 (peel strength), 일체형 구조 (integrated structure)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2001-0092192 A (SAMSUNG SDI CO., LTD.) 24 October 2001 (2001-10-24) See abstract; claims 1-10; paragraphs [0019], [0028], [0029], [0033]-[0035], [0041], [0059], [0060] and [0064]; and figures 1a, 1b and 5. | 1-5,9-13,15 |
| Y | | 6-8,14,16-20 |
| Y | KR 10-2019-0074833 A (SAMSUNG ELECTRONICS CO., LTD. et al.) 28 June 2019 (2019-06-28) See abstract; claims 1, 5, 6 and 23; and paragraphs [0208]-[0212]. | 6-8,14,17-20 |
| Y | KR 10-2424631 B1 (U&S ENERGY, INC.) 25 July 2022 (2022-07-25) See claim 1; and paragraph [0038]. | 16 |
| A | KR 10-0670483 B1 (SAMSUNG SDI CO., LTD.) 16 January 2007 (2007-01-16) See entire document. | 1-20 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **27 June 2024** | **27 June 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/003725** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2019-0079523 A (LG CHEM, LTD.) 05 July 2019 (2019-07-05)<br>See entire document. | 1-20 |

Form PCT/ISA/210 (second sheet) (July 2022)

**INTERNATIONAL SEARCH REPORT**
Information on patent family members

International application No.

**PCT/KR2024/003725**

| Patent document cited in search report | | | Publication date (day/month/year) | Patent family member(s) | | | Publication date (day/month/year) |
|---|---|---|---|---|---|---|---|
| KR | 10-2001-0092192 | A | 24 October 2001 | KR | 10-0327487 | B1 | 13 March 2002 |
| KR | 10-2019-0074833 | A | 28 June 2019 | KR | 10-2566407 | B1 | 14 August 2023 |
| | | | | US | 10910670 | B2 | 02 February 2021 |
| | | | | US | 2019-0190068 | A1 | 20 June 2019 |
| KR | 10-2424631 | B1 | 25 July 2022 | CN | 114830431 | A | 29 July 2022 |
| | | | | EP | 4084211 | A1 | 02 November 2022 |
| | | | | JP | 2023-508672 | A | 03 March 2023 |
| | | | | JP | 7477209 | B2 | 01 May 2024 |
| | | | | KR | 10-2021-0081548 | A | 02 July 2021 |
| | | | | US | 2023-0027109 | A1 | 26 January 2023 |
| | | | | WO | 2021-132886 | A1 | 01 July 2021 |
| KR | 10-0670483 | B1 | 16 January 2007 | EP | 1758199 | A2 | 28 February 2007 |
| | | | | EP | 1758199 | A3 | 18 April 2007 |
| | | | | EP | 1758199 | B1 | 18 January 2012 |
| | | | | US | 2007-0048602 | A1 | 01 March 2007 |
| | | | | US | 8592070 | B2 | 26 November 2013 |
| KR | 10-2019-0079523 | A | 05 July 2019 | CN | 110622346 | A | 27 December 2019 |
| | | | | CN | 110622346 | B | 13 September 2022 |
| | | | | EP | 3624248 | A1 | 18 March 2020 |
| | | | | KR | 10-2204304 | B1 | 18 January 2021 |
| | | | | US | 11367894 | B2 | 21 June 2022 |
| | | | | US | 2020-0091550 | A1 | 19 March 2020 |
| | | | | WO | 2019-132460 | A1 | 04 July 2019 |

Form PCT/ISA/210 (patent family annex) (July 2022)